# EUROPÄISCHE PATENTSCHRIFT

(11) **EP 4 189 793 B1**
(45) Veröffentlichungstag und Bekanntmachung des Hinweises auf die Patenterteilung: **25.02.2026**
(21) Anmeldenummer: 21751791.1
(22) Anmeldetag: 28.07.2021
(51) Int. Cl.: H02G 1/12

(54) **VORRICHTUNG UND VERFAHREN ZUR KONFEKTIONIERUNG EINES ELEKTRISCHEN KABELS**
DEVICE AND METHOD FOR PREPARING AN ELECTRIC CABLE
DISPOSITIF ET PROCÉDÉ DE PRÉPARATION D'UN CÂBLE ÉLECTRIQUE

(30) Priorität: 30.07.2020 DE 102020120110
(43) Veröffentlichungstag der Anmeldung: 07.06.2023
(73) Patentinhaber: Metzner Holding GmbH, 89079 Ulm (DE)
(72) Erfinder: SORG, Manfred, 89079 Ulm (DE)
(74) Vertreter: Lorenz, Matthias
(86) Internationale Anmeldenummer: PCT/EP2021/071134
(87) Internationale Veröffentlichungsnummer: WO 2022/023409

(56) Entgegenhaltungen:
- WO-A1-2019/243193
- DE-B3- 102019 115 608
- JP-A- 2001 211 520
- US-A- 4 059 893
- US-A- 4 546 675
- US-A- 5 072 632
- US-A- 5 320 002

## Beschreibung

Die Erfindung betrifft eine Vorrichtung zur Konfektionierung eines elektrischen Kabels, aufweisend ein Schneidemodul zum Einschneiden in eine Kabelkomponente des Kabels, gemäß dem Oberbegriff des Anspruchs 1.

Die Erfindung betrifft ferner ein Verfahren zur Konfektionierung eines elektrischen Kabels, wonach eine Kabelkomponente des Kabels eingeschnitten wird, gemäß dem Oberbegriff des Anspruchs 15.

Im Rahmen der Konfektionierung eines elektrischen Kabels wird zumindest ein Kabelende des elektrischen Kabels bearbeitet, um dieses für die Verbindung mit einem Steckverbinder vorzubereiten oder um einen Steckverbinder auf dem zu bearbeitenden Kabelende teilweise oder vollständig zu montieren. Dabei ist es häufig erforderlich, Kabelkomponenten des Kabels, wie einen Kabelmantel, einen Außenleiter, eine Kabelfolie, ein Dielektrikum oder eine Füllschicht, bereichsweise von dem Kabelende abzuisolieren bzw. zu entfernen.

In elektrischen Kabeln werden mitunter Kabelfolien zur elektromagnetischen Abschirmung, zur Stabilisierung und/oder zum Schutz vor Feuchtigkeit oder mechanischer Einwirkung verwendet. Beispielsweise kann Feuchtigkeit in Form von Dampf die Isolierung eines elektrischen Innenleiters des Kabels schädigen - hier kann eine die Isolierung umhüllende Kabelfolie Abhilfe schaffen. Ferner kann eine Kabelfolie auch als Trennschicht zwischen einem Kabelschirmgeflecht und einem Kabelmantel vorteilhaft sein, wodurch der Kabelmantel bei einem Abisolierprozess leichter - oder überhaupt erst - abziehbar ist, da sich der Kabelmantel beim Abziehen andernfalls in dem Kabelschirmgeflecht mechanisch verhaken bzw. festsetzen kann. Derartige Kabelfolien sind auch unter den Begriffen "Schirmfolie", "Isolationsfolie", "Schutzfolie" oder "Folienschirm" bekannt.

Da vorzugsweise reißfeste bzw. mechanisch robuste Folien eingesetzt werden, ist insbesondere ein Entfernen der Kabelfolie im Rahmen eines automatisierten Kabelkonfektionierungsverfahrens aufwändig und in der Regel nur durch ergänzenden, manuellen Einsatz mit ausreichender Genauigkeit und Prozesssicherheit möglich. Der Vorgang des Entfernens der Kabelfolie erhöht damit die Prozesszeit deutlich und verhindert eine vollautomatisierte Kabelkonfektionierung.

Zur Vereinfachung des Abisolierens bzw. des Entfernens der Kabelfolie wird in der WO 2007/104402 A1 vorgeschlagen, das Kabel bzw. die Kabelfolie bereits so herzustellen, dass die Kabelfolie anschließend leichter entfernt werden kann. Dabei wird die Folie mit einer Anzahl zueinander beabstandeter Prägungen hergestellt, die infolge eine Schwächung des Folienmaterials bewirken. Ein manuelles Abisolieren kann hierdurch erleichtert werden. Nachteilig ist allerdings, dass die Kabelfolie dann im Bereich des gesamten Kabels, also auch im Bereich des Kabels, in dem die Kabelfolie nicht entfernt werden soll, mechanisch geschwächt ist. Die absichtliche Schwächung des Folienmaterials kann somit kontraproduktiv sein. Ferner ist der Herstellungsprozess der Kabelfolie deutlich aufwändiger, da die Prägungen auch derart eingebracht werden müssen, dass diese die Folie möglichst nicht durchdringen, da zumeist der zuvor genannte Feuchtigkeitsschutz gewährleistet sein muss.

Ein Problem beim Abisolieren von Kabelkomponenten, insbesondere beim automatisierten Entfernen der Kabelfolie ist außerdem, dass es sich in der Praxis nur schwer vermeiden lässt, dass unter der Kabelkomponente befindliche weitere Komponenten des Kabels zumindest oberflächlich angeschnitten bzw. angeritzt und damit beschädigt werden. Das Problem wird noch dadurch verstärkt, dass viele Kabel definitionsgemäß oder zumindest toleranzbedingt keinen gleichmäßig kreisförmigen Querschnitt aufweisen.

Eine Beschädigung der Isolation eines Innenleiters durch einen ungewollt zu tief gesetzten Schnitt kann die Durchschlagsfestigkeit der Isolation, die mechanische Robustheit bzw. die Widerstandsfähigkeit der Isolation und die elektrischen Hochfrequenzeigenschaften des Kabels verschlechtern. Wird durch einen zu tief gesetzten Schnitt ein Kabelschirmgeflecht oder ein sonstiger Leiter des Kabels beschädigt, können die Leitfähigkeit und die mechanische Robustheit, insbesondere die Brüchigkeit, des Leiters verschlechtert sein. Insbesondere ein häufig eingesetztes Kabelschirmgeflecht aus mit Zinn beschichtetem Kupfer kann hierfür anfällig sein. Das beschädigte Kabelschirmgeflecht kann in Folge bei Beanspruchung des Kabels an der beschädigten Stelle brechen, wodurch die Masseleitung und die elektromagnetische Dichtigkeit des Kabels gefährdet sein können.

Zur Vermeidung des Problems der Beschädigung von Komponenten des Kabels unterhalb der Kabelfolie bei einem Schneiden der Kabelfolie wird in der DE 10 2004 047 384 B3 ein spezielles Kabel vorgeschlagen, bei dem eine Füllschicht unterhalb der Kabelfolie vorgesehen ist, wobei bei einem Durchschneiden der Folie die Messerklinge nur die Füllschicht, sozusagen als "Opfermaterial", schädigt. Ein derart aufgebautes Kabel kann anschließend mit einfachen Abisolierwerkzeugen für eine Konfektionierung vorbereitet werden. Ein entsprechend ausgestattetes Kabel ist allerdings in der Herstellung aufwändig und somit teuer, weist ein erhöhtes Gewicht und einen vergrößerten Umfang auf, wodurch es in der Praxis insgesamt unpraktisch erscheint.

Zum weiteren technischen Hintergrund sei außerdem noch auf die folgenden Druckschriften verwiesen. Die US 5 072 632 A betrifft eine Abisoliervorrichtung, die sich zum Abisolieren von mehradrigen Kabeln eignen kann. Es wird eine Klemmanordnung zum Halten des Kabelendes während des Abisoliervorgangs, eine Schneid- und Biegeanordnung zum Abtrennen des Endes des Kabelmantels und dadurch zum Freilegen des darunter liegenden Abschirmmaterials und der Leiter und eine Abziehanordnung zum Abziehen des geschnittenen Teils von dem Ende des Kabels vorgeschlagen. Die US 4 546 675 A betrifft ein Verfahren und eine Vorrichtung zum Bearbeiten eines mit einem Isolator beschichteten Kabels, um konfektionierte Kabelsegmente mit gegebenen Längen zu erhalten. Die WO 2019/243193 A1 betrifft eine Vorrichtung zum Abisolieren eines Kabels, mit zumindest einer Stützrollenanordnung und einer Arbeitsradanordnung, wobei das Ende des abzuisolierenden Kabels unter Aufbringung einer Andruckkraft zwischen der Arbeitsradanordnung und der Stützrollenanordnung einklemmbar ist.

In Anbetracht des bekannten Stands der Technik besteht die Aufgabe der vorliegenden Erfindung darin, eine vorteilhafte Vorrichtung zur Konfektionierung eines elektrischen Kabels bereitzustellen, mit der insbesondere ein Endstück einer Kabelkomponente einfach und prozesssicher von dem Kabel entfernt werden kann.

Der vorliegenden Erfindung liegt auch die Aufgabe zugrunde, ein Verfahren zur Konfektionierung eines elektrischen Kabels bereitzustellen, mit dem insbesondere ein Endstück einer Kabelkomponente einfach und prozesssicher von dem Kabel entfernt werden kann.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Es ist eine Vorrichtung zur Konfektionierung eines elektrischen Kabels vorgesehen, die ein Schneidemodul zum Einschneiden in eine Kabelkomponente des Kabels an einer vorgesehenen Riss- bzw. Schnittposition aufweist.

Der Bereich des elektrischen Kabels, in dem die Bearbeitung vornehmlich stattfindet, wird nachfolgend mitunter auch als "zu bearbeitender Kabelabschnitt" oder "vorderes Kabelende" bezeichnet. Sofern nachfolgend die relative Angabe "vorne" verwendet wird, so ist diese Angabe somit auf das derzeit bearbeitete Kabelende bezogen. Sofern nachfolgend die relative Angabe "hinten" verwendet wird, so ist diese Angabe auf das dem vorderen Kabelende entgegengesetzte, hintere Kabelende bezogen.

Im Rahmen der erfindungsgemäßen Konfektionierung des Kabels kann eines der beiden Kabelenden oder können beide Kabelenden bearbeitet bzw. konfektioniert werden. Sofern beide Kabelenden bearbeitet bzw. konfektioniert werden, so kann dies nacheinander oder gleichzeitig erfolgen. Außerdem können auch mehrere Kabel von der erfindungsgemäßen Vorrichtung konfektioniert bzw. bearbeitet werden, beispielsweise nacheinander oder gleichzeitig, insbesondere um mehrere Kabel (z. B. zwei Kabel) mit einem gemeinsamen Steckverbinder oder einer gemeinsamen Steckverbinderkomponente zu bestücken.

Im Rahmen der erfindungsgemäßen Konfektionierung des Kabels
a) kann das Kabel bzw. das zu bearbeitenden Kabelende für eine Steckverbindermontage vorbereitet werden; und/oder
b) können einzelne Steckverbinderkomponenten eines Steckverbinders teilweise auf dem Kabel bzw. auf dem zu bearbeitenden Kabelende montiert werden; und/oder
c) kann ein Steckverbinder vollständig auf dem Kabel bzw. auf dem entsprechenden Kabelende montiert werden.

Insbesondere kann also auch nur eine Teilkonfektionierung vorgesehen sein bzw. können auch nur Vorarbeiten für eine Steckverbindermontage getroffen werden. Die Vorrichtung oder das Verfahren können auch als eine einzelne von mehreren Komponenten zur Konfektionierung eines Kabels im Rahmen eines übergeordneten Konfektionierungssystems vorgesehen sein.

Grundsätzlich kann sich die Erfindung zur Konfektionierung eines beliebigen Kabels eignen. Im eingelegten Zustand kann das elektrische Kabel gegebenenfalls - aber nicht zwingend - als Teil der Vorrichtung angesehen werden.

Das elektrische Kabel kann einen Kabelmantel aufweisen. Der Kabelmantel kann aus einem Kunststoff ausgebildet sein, beispielsweise aus einem thermoplastischen Polymer, insbesondere aus weichem Polyvinylchlorid (PVC). Vorzugsweise können alle weiteren Kabelkomponenten des Kabels von dem Kabelmantel eingehüllt sein.

Das elektrische Kabel kann einen Außenleiter aufweisen. Der Außenleiter kann vorzugsweise als Kabelschirmgeflecht (auch unter dem Begriff "Geflechtschirm" bekannt) ausgebildet sein, das mehrere miteinander verflochtene Einzeldrähte aufweist. Die Einzeldrähte des Kabelschirmgeflechts können beispielsweise als verzinnte Kupferdrähte ausgebildet sein. Vorzugsweise kann der Außenleiter unmittelbar unter dem Kabelmantel verlaufen; der Außenleiter kann allerdings auch eine weiter innen liegende Kabelkomponente bilden und beispielsweise auch unmittelbar unter einer Kabelfolie verlaufen.

Das Kabel kann eine Kabelfolie aufweisen. Die Kabelfolie kann aus einem einzigen Material, insbesondere aus einem Kunststoff (z. B. Polyethylenterephthalat, PET), aus einem Metall (z. B. Aluminium oder Kupfer) oder aus einer Textilie (z. B. Polyester) bestehen. Die Kabelfolie kann allerdings auch als Verbundfolie ausgebildet sein und zumindest zwei Einzelschichten unterschiedlichen Materials umfassen. Die Kabelfolie kann beispielsweise genau zwei Einzelschichten oder mehr Einzelschichten, genau drei Einzelschichten oder mehr Einzelschichten, genau vier Einzelschichten oder mehr Einzelschichten, genau fünf Einzelschichten oder noch mehr Einzelschichten aufweisen. Die Zusammenstellung der Einzelschichten kann beliebig sein. Beispielsweise kann eine Verbundfolie aus einer Kunststoffschicht (z. B. PET-Schicht) vorgesehen sein, die beidseitig von jeweils einer Metallschicht (z. B. Aluminiumschicht) eingefasst ist. Vorzugsweise kann die Kabelfolie unmittelbar unterhalb des Außenleiters, insbesondere eines Kabelschirmgeflechts, verlaufen. Die Kabelfolie kann aber beispielsweise auch unmittelbar unterhalb des Kabelmantels oder an einer sonstigen Stelle durch das Kabel verlaufen.

Das elektrische Kabel kann genau einen Innenleiter oder mehrere Innenleiter aufweisen, beispielsweise genau zwei Innenleiter oder mehr Innenleiter, genau drei Innenleiter oder mehr Innenleiter, genau vier Innenleiter oder mehr Innenleiter, genau fünf Innenleiter oder mehr Innenleiter, genau sechs Innenleiter oder mehr Innenleiter, genau sieben Innenleiter oder mehr Innenleiter, genau acht Innenleiter oder noch mehr Innenleiter. Besonders vorteilhaft kann sich die Erfindung zur Verwendung eines Kabels mit einer Anzahl Innenleiter eignen, die einen ovalen oder sonstigen unsymmetrischen Kabelquerschnitt bedingen, wie beispielsweise genau zwei Innenleiter.

Ein Innenleiter des Kabels kann beispielsweise als Einzeldraht oder als Litze mit mehreren Einzeldrähten ausgebildet sein. Der Einzeldraht oder die Einzeldrähte des Innenleiters kann bzw. können aus einem Metalldraht ausgebildet sein, beispielsweise aus einem verzinnten Kupferdraht. Vorzugsweise kann der Innenleiter bzw. können die Innenleiter unterhalb der Kabelfolie verlaufen (zusammen mit der nachfolgend beschriebenen Isolation).

Die Innenleiter können eine jeweilige Isolation bzw. ein Dielektrikum aufweisen und/oder von einer gemeinsamen dielektrischen bzw. isolierenden Füllschicht ("Filler") umgeben sein. Die Isolation bzw. das Dielektrikum kann aus einem Kunststoff ausgebildet sein, beispielsweise aus geschäumtem Polypropylen.

Mehrere Innenleiter (zusammen mit ihren jeweiligen Isolationen) können in dem Kabel parallel geführt verlaufen oder verdrillt bzw. verseilt durch das Kabel verlaufen. Insbesondere kann vorgesehen sein, dass jeweils zwei Innenleiter ein differentielles Innenleiterpaar bilden, die mit einem definierten Schlag (Maß der Verdrillung) durch das Kabel verlaufen.

Besonders vorteilhaft eignet sich die Erfindung zum Entfernen der Kabelkomponente bzw. dem Endstück der Kabelkomponente von elektrischen Kabeln mit geringem Querschnitt für die Datenübertragung, beispielsweise im Fahrzeugbereich, besonders bevorzugt im Bereich der Elektromobilität.

Es kann vorgesehen sein, dass die einzuschneidende Kabelkomponente zunächst zumindest teilweise freigelegt wird (vorzugsweise von einem von dem Schneidemodul unabhängigen, vorgelagerten Modul). Vorzugsweise ist die Kabelkomponente derart freigelegt, dass diese zumindest in dem Bereich der vorgesehenen Schnittposition zugänglich ist.

Bei der vorgesehenen Schnittposition handelt es sich vorzugsweise um einen ringförmig um den Umfang der Kabelkomponente umlaufenden Bereich mit geringer axialer Erstreckung. Vorzugsweise erfolgt die Bearbeitung der Kabelkomponente durch das Schneidemodul derart, dass die Kabelkomponente im späteren Verlauf der Bearbeitung an der Schnittposition möglichst kontrolliert abreißt (in der Art einer Sollbruchstelle), um ein vorderes Endstück der Kabelkomponente abzutrennen. Die Kabelkomponente kann an der Schnittposition aber auch bereits im Rahmen der Bearbeitung durch das Schneidemodul vollständig von dem auf dem Kabel verbleibenden Teil der Kabelkomponente abgetrennt werden.

Da die Kabelkomponente gegebenenfalls auch erst später an der Schnittposition abgetrennt wird bzw. umlaufend einreißen soll, kann die "Schnittposition" auch als "Rissposition" bezeichnet werden.

Erfindungsgemäß ist vorgesehen, dass das Schneidemodul ein antreibbares Rotorelement aufweist. An dem Rotorelement wird ein Rundmesser mit seiner Drehachse exzentrisch gehalten. Das Rundmesser weist eine runde Schneide auf. Das Rundmesser wird zum Einschneiden in die Kabelkomponente durch eine Drehbewegung des Rotorelements um den Umfang der Kabelkomponente herumgeführt.

Vorzugsweise weist das Rundmesser eine vollständig umlaufende Schneide auf.

Das Rundmesser kann im Wesentlichen ausgebildet sein wie ein so genannter Rollenschneider. Das Rundmesser weist im einfachsten Fall nur die um eine Rotationsachse drehbar gelagerte Schneide auf.

Die Schneide des Rundmessers ist vorzugsweise gerade, kann grundsätzlich aber auch wellen- oder zickzackförmig profiliert sein. Eine gerade Schneide ist jedoch besonders vorteilhaft, da die Kabelkomponente dann vorzugsweise geschnitten und nicht zersägt werden kann, wodurch während der Bearbeitung keine (oder zumindest zu vernachlässigende) Späne oder Grate entstehen.

Vorzugsweise wird die Kabelkomponente von dem Rundmesser nicht vollständig durchgeschnitten, sondern nur angeschnitten. Grundsätzlich kann die Kabelkomponente aber auch vollständig durchgeschnitten werden, dies ist jedoch nicht bevorzugt. Es kann somit vorgesehen sein, zumindest eine von der Kabelmittelachse abgewandte Außenschicht der Kabelkomponente an der Schnittposition einzuschneiden. Bei der Außenschicht kann es sich beispielsweise um eine oder mehrere äußere Materialschichten einer Verbundfolie handeln. Es kann sich bei der Außenschicht allerdings auch um einen radial außen liegenden Bereich einer einzelnen Materialschicht einer Kabelkomponente oder einer nur eine einzige Materialschicht aufweisenden Kabelkomponente handeln.

Vorzugsweise kann durch das Einschneiden eine Sollbruchstelle in die Kabelkomponente eingebracht werden. Die Sollbruchstelle kann durch eine Materialverjüngung (Kerbe, Perforation und/oder Ritzspur) eingebracht werden. Durch die Sollbruchstelle kann die Kabelkomponente später, bei entsprechender Belastung, vorhersagbar brechen bzw. reißen. Durch die Sollbruchstelle bzw. die Kerbwirkung kann die Kabelkomponente an der Schnittposition definiert geschwächt werden.

Wohingegen das Einschneiden in eine Kabelkomponente, insbesondere in eine Kabelfolie, mit einem herkömmlichen Messer oder mit einem Formmesser aufgrund der in der Regel geringen Dicke der Kabelkomponente und der toleranzbehafteten Querschnittsgeometrie des Kabels in der Praxis häufig zu einer nicht tolerierbaren Beschädigung von unter der Kabelkomponente verlaufenden, weiteren Kabelkomponenten führen kann, hat sich überraschend herausgestellt, dass sich das Einschneiden in die Kabelkomponente bei Verwendung eines Rundmessers mit hoher Präzision steuern lässt, wodurch eine unerwünschte Beschädigung von Kabelkomponenten vermieden werden kann.

Die Verwendung eines antreibbaren Rotorelements, um das Rundmesser exzentrisch um das Kabel herum zu führen, hat sich als besonders vorteilhaft herausgestellt. Auf diese Weise kann eine aufwändigere und weniger präzise zu realisierende Drehung des Kabels um seine Mittelachse vermieden werden. Insbesondere kann die Positionierung des Schnitts bzw. die Positionierung des Kabels relativ zu dem Rundmesser besonders exakt erfolgen.

Durch die Befestigung des Rundmessers an dem angetriebenen Rotorelement kann außerdem auf vorteilhafte Weise zumindest ein Teil der Rotationsbewegung (insbesondere durch Reibung zwischen dem Rundmesser und dem Rotorelement) auf das Rundmesser übertragen werden.

Das Rundmesser selbst kann vorzugsweise antriebslos jedoch um seine Rotationsachse drehbar an dem Rotorelement gelagert bzw. von dem Rotorelement gehalten werden. Das Rundmesser kann sich damit grundsätzlich frei auf der Kabelkomponente abrollen, kann jedoch gleichzeitig auch eine von der Rotation des Rotorelements getriebene, schneidende Bewegung ausführen. Insbesondere diese Kombination hat sich überraschend als besonders geeignet für ein prozesssicheres und exaktes Einbringen einer Sollbruchstelle an der vorgesehenen Schnittposition herausgestellt.

Es kann ein Gleitlager oder ein Wälzlager, beispielsweise ein Kugellager, insbesondere ein Rillenkugellager, vorgesehen sein, um das Rundmesser drehbar um seine Rotationsachse zu lagern.

In einer vorteilhaften Weiterbildung der Erfindung kann vorgesehen sein, dass die Schneide des Rundmessers vollständig rund ist.

Ein vollständig rundes Rundmesser bzw. eine vollständig runde Schneide des Rundmessers kann die Kabelkonfektionierung, insbesondere die Positionierungsanforderungen innerhalb des Schneidemoduls, vereinfachen, da die Kabelbearbeitung dann nicht von der Ausrichtung des Messers abhängig gemacht werden muss.

Gemäß einer Weiterbildung der Erfindung kann vorgesehen sein, dass das Rotorelement als Zahnriemenrad ausgebildet ist.

Grundsätzlich kann das Rotorelement beliebig ausgebildet sein, beispielsweise als Rotorscheibe, die über eine Welle von einem Elektromotor angetrieben wird. Ein Zahnriemenrad, das vorzugsweise mittels eines Zahnriemens von einem benachbarten, zweiten Zahnriemenrad angetrieben wird, hat sich zur Vereinfachung des Aufbaus des Schneidemoduls allerdings als besonders geeignet herausgestellt.

Erfindungsgemäß ist vorgesehen, dass das Rotorelement eine zentrale Ausnehmung aufweist, in der ein relativ zu dem Rotorelement feststehendes Schablonenelement koaxial angeordnet ist. Das Schablonenelement bildet den Querschnittsverlauf der Kabelkomponente nach (insbesondere in einem größeren Maßstab).

Durch das Schablonenelement kann die Schnitttiefe des Rundmesser in Abhängigkeit von der Kabelgeometrie begrenzt werden um sicherzustellen, dass die Kabelkomponente nur bis zu einer vorgesehenen Tiefe eingeschnitten wird. Es kann insbesondere sichergestellt sein, dass die Kabelkomponente nicht vollständig durchgeschnitten wird, wodurch Beschädigungen von unmittelbar unter der Kabelkomponente verlaufenden Kabelkomponenten vermieden werden können.

Das Schablonenelement kann beispielsweise zur Bearbeitung runder Kabel rund und zur Bearbeitung von elliptisch Kabeln elliptisch ausgebildet sein.

Es kann ergänzend oder alternativ auch vorgesehen sein, dass eine koaxial an dem Rundmesser angeordnete Schnitttiefenbegrenzung entlang des Kabelmantels des Kabels umlaufend geführt wird, während das Rundmesser die Kabelkomponente einschneidet. Hierdurch kann die Schnitttiefe während der radialen Bewegung des Rundmessers um die Kabelmittelachse unmittelbar vom tatsächlichen Verlauf des Kabelmantels abhängen und damit für jedes Winkelsegment optimal an den Querschnitt des Kabels angepasst sein.

Für eine optionale Schnitttiefenregelung kann außerdem ein Sensor oder können mehrere Sensoren (beispielsweise Wegsensoren wie Potentiometergeber, Dehnungsmessstreifen, induktive Sensoren, kapazitive Sensoren oder optische Sensoren wie Laser-Distanzsensoren und/oder Kameras) vorgesehen sein, um eine Ist-Schnitttiefe des Rundmessers in der Kabelkomponente und/oder eine Soll-Schnitttiefe des Rundmessers in der Kabelkomponente kontinuierlich oder in diskreten Zeitpunkten während des Einschneidens zu erfassen. Die erfassten Informationen können optional zur Nachregelung des Abstands zwischen der Rotationsachse des Rundmessers und der Kabelmittelachse herangezogen werden. Vorzugsweise ist die Schnitttiefenregelung eingerichtet, um die Schnitttiefe des von dem Rundmesser erzeugten Einschnitts entlang des Umfangs des Kabels konstant zu halten.

In einer Weiterbildung der Erfindung kann vorgesehen sein, dass das Rundmesser eine zentrale Antriebsrolle aufweist, mit der das Rundmesser entlang des Umfangs des Schablonenelements um das Schablonenelement herum führbar ist, wenn das Rotorelement die Drehbewegung ausführt.

Das Schablonenelement kann somit in der Art einer Kulisse zur Führung des Rundmessers mittels der Antriebrolle verwendbar sein.

In einer Weiterbildung der Erfindung kann vorgesehen sein, dass das Schablonenelement eine zentrale Öffnung zur Aufnahme eines freien Endes des Kabels aufweist.

Auf diese Weise kann das Kabel mit seinem vorderen, freien Ende gegebenenfalls durch die Öffnung des Schablonenelements hindurchgeführt werden, beispielsweise wenn die vorgesehene Schnittposition vergleichsweise weit von dem vorderen Kabelende entfernt angeordnet ist. Hierdurch kann die Flexibilität des Schneidemoduls zur Bearbeitung verschiedener Kabeltypen bzw. zur Konfektionierung des Kabels mit beliebigen Steckverbindern erhöht sein.

In einer vorteilhaften Weiterbildung der Erfindung kann vorgesehen sein, dass das Rotorelement eine Lagerplatte für das Rundmesser aufweist, wobei das Rundmesser durch eine Bohrung (oder eine sonstige Ausnehmung) der Lagerplatte hindurchgeführt und mit einem mittleren Abschnitt formschlüssig, jedoch drehbar in der Lagerplatte aufgenommen ist, um das Rundmesser an dem Rotorelement zu halten.

Das Rundmesser kann somit vorzugsweise mittelbar über die Lagerplatte an dem Rotorelement gehalten werden.

Durch Verwendung der Lagerplatte ergeben sich mehrere Vorteile in der Handhabung und dem Aufbau des Schneidemoduls. Einerseits kann das Rundmesser vergleichsweise unkompliziert austauschbar sein. Außerdem kann die nachfolgend noch beschriebene Zustellung des Rundmessers an das Kabel durch ein Verstellen der Lagerplatte besonders einfach erfolgen.

In einer Weiterbildung der Erfindung kann schließlich vorgesehen sein, dass die Lagerplatte mittels einer Führungseinrichtung zusammen mit dem Rundmesser in Richtung auf die Mittelachse des Rotorelements zustellbar ist.

Auf diese Weise kann das Rundmesser somit zum Ausführen des Schnitts an der vorgesehenen Schnittposition an die Kabelmittelachse zustellbar und zum Einführen oder Entfernen des Kabels von der Kabelmittelachse weg bewegbar sein. Alternativ oder zusätzlich kann auch eine entsprechende Bewegung des Kabels vorgesehen sein - dies ist in der Regel allerdings aufwändiger zu realisieren und deshalb nicht bevorzugt. Auch die manuelle Zustellung durch einen Mitarbeiter der Produktion kann grundsätzlich vorgesehen sein (allerdings ebenfalls nicht bevorzugt).

In einer vorteilhaften Weiterbildung der Erfindung kann vorgesehen sein, dass die Führungseinrichtung wenigstens eine auf dem Rotorelement befestigte Führungsschiene zur Führung der Lagerplatte aufweist.

Insbesondere die Verwendung einer Führungsschiene zur Führung der Lagerplatte hat sich als besonders geeignet herausgestellt. Vorzugsweise sind genau zwei Führungsschienen vorgesehen, entlang denen die Lagerplatte im Bereich ihrer beiden Enden geführt wird. Es können grundsätzlich aber beliebig viele Führungsschienen vorgesehen sein, um die Lagerplatte zu führen, beispielsweise auch nur eine einzige Führungsschiene.

Die Führungsschiene kann durch eine Erhebung auf dem Rotorelement ausgebildet bzw. auf dem Rotorelement aufgesetzt sein.

Die Führungseinrichtung bzw. die wenigstens eine Führungsschiene kann ausgebildet sein, um die Lagerplatte entlang einer linearen Führungsbewegung auf die Mittelachse des Rotorelements zuzustellen. Grundsätzlich kann allerdings auch eine kurvenförmige Führung vorgesehen sein. Besonders bevorzugt ist die Führungseinrichtung bzw. die wenigstens eine Führungsschiene ausgebildet, um die Lagerplatte orthogonal auf die Mittelachse des Rotorelements zuzustellen. Auch eine diagonale Zustellung kann allerdings vorgesehen sein.

In einer vorteilhaften Weiterbildung der Erfindung kann vorgesehen sein, dass die Führungseinrichtung wenigstens einen sich durch das Rotorelement erstreckenden Führungskanal zur Führung der Lagerplatte und/oder des Rundmessers aufweist.

In den Führungskanal kann beispielsweise ein korrespondierendes Gegenstück der Lagerplatte eingreifen.

Ein Führungskanal kann insbesondere vorgesehen sein, um das von der Schneide abgewandte, hintere Ende des Rundmessers zu führen, vorzugsweise ergänzend zur Führung der Lagerplatte selbst. Vorzugsweise kann die bereits erwähnte zentrale Antriebsrolle des Rundmessers in einem Führungskanal des Rotorelements geführt sein.

Der Führungskanal weist vorzugsweise einen linearen bzw. geradlinigen Verlauf auf, besonders bevorzugt orthogonal zur Mittelachse des Rotorelements, gegebenenfalls aber auch diagonal. Auch ein kurviger Verlauf des Führungskanals kann allerdings vorgesehen sein.

Der Führungskanal oder die Führungsschiene und die Lagerplatte können optional eine Schwalbenschwanzverbindung oder eine vergleichbare formschlüssige Verbindung ausbilden.

In einer vorteilhaften Weiterbildung der Erfindung kann vorgesehen sein, dass ein Stützkörper auf dem Rotorelement befestigt ist, wobei ein Federelement (zum Beispiel einer Druckfeder oder einer Zugfeder) vorgesehen und derart zwischen dem Stützkörper und der Lagerplatte oder zwischen dem Stützkörper und einem mit der Lagerplatte starr gekoppelten Betätigungsglied angeordnet ist, dass die Federkraft des Federelements die Lagerplatte in Richtung auf die Mittelachse des Rotorelements drückt.

Die Kombination aus Stützkörper, Federelement und optional Betätigungsglied kann vorzugsweise derart ausgebildet und angeordnet sein, dass die Lagerplatte zusammen mit dem Rundmesser ohne weitere Maßnahmen, das heißt, wenn das System aus Stützkörper, Federelement und Betätigungsglied von äußeren Kräften (wie z. B. dem nachfolgend noch beschriebenen Aktuator) unbeeinflusst ist, auf die Mittelachse des Rotorelements zubewegt wird. Ohne äußere Einflussnahme kann das Rundmesser somit automatisch an ein entsprechend in das Schneidemodul eingeführtes Kabel zugestellt sein. Auf diese Weise kann die Notwendigkeit entfallen, das Rundmesser während der Kabelbearbeitung bzw. während des Drehens des Rotorelements gezielt durch äußere Einflussnahme an das Kabel zu drücken. Dies kann den Aufbau der Vorrichtung bzw. des Schneidemoduls deutlich erleichtern. Lediglich zum Einführen oder Herausführen des Kabels aus dem Schneidemodul kann es dann gegebenenfalls erforderlich sein, auf das Federelement entsprechend einzuwirken, um die Lagerplatte zusammen mit dem Rundmesser ausreichend von der Mittelachse des Rotorelements zu entfernen.

Das Federelement kann in vorteilhafter Weise außerdem eine Schneidedruckregelung und/oder eine Schneidedruckbegrenzung für den von dem Rundmesser auf die Kabelkomponente aufgebrachten Schneidedruck aufweisen. Vorzugsweise wird der Schneidedruck des Rundmessers während des umlaufenden Einschneidens möglichst konstant gehalten.

In einer Weiterbildung der Erfindung kann vorgesehen sein, dass das Schneidemodul einen Aktuator aufweist, um die Lagerplatte in Richtung auf die Mittelachse des Rotorelements zuzustellen oder von der Mittelachse des Rotorelements wegzubewegen.

Vorzugsweise wirkt der Aktuator auf ein starr mit der Lagerplatte gekoppeltes Betätigungsglied ein, um die Lagerplatte zu bewegen. Besonders bevorzugt bewegt der Aktuator die Lagerplatte entgegen der Federkraft des zuvor erwähnten Federelements, um die Lagerplatte von der Mittelachse des Rotorelements wegzubewegen.

Gemäß einer Weiterbildung der Erfindung kann vorgesehen sein, dass der Aktuator als Linearaktuator ausgebildet ist und einen linear beweglichen Stempel aufweist, mit dem der Linearaktuator zur Verstellung der Lagerplatte auf die Lagerplatte einzuwirken vermag.

Alternativ zu einem Linearaktuator kann beispielsweise aber auch ein Aktuator zur Ausführung einer rotierenden Bewegung vorgesehen sein, der dann vorzugsweise mittels eines Exzenters bzw. eines exzentrisch angeordneten Stempels auf die Lagerplatte einzuwirken vermag, um die Lagerplatte zu verstellen.

In einer vorteilhaften Weiterbildung der Erfindung kann vorgesehen sein, dass das Schneidemodul einen mit dem Rotorelement zu dessen Antrieb mechanisch gekoppelten Elektromotor aufweist, vorzugsweise einen Servomotor.

Grundsätzlich können allerdings auch andere Arten von Motoren vorgesehen sein, beispielsweise auch Schrittmotoren.

Der Elektromotor oder eine Motorsteuereinrichtung können eingerichtet sein, um das Rotorelement um einen vorgesehenen Winkelabschnitt zu drehen, insbesondere um wenigstens eine vollständige Umdrehung oder um ein Vielfaches einer vollständigen Umdrehung zu drehen. Besonders bevorzugt kann eine Drehung um genau zwei volle Umdrehungen (oder mehr) vorgesehen sein.

In einer vorteilhaften Weiterbildung der Erfindung kann vorgesehen sein, dass das Schneidemodul eine modulinterne Greifereinrichtung aufweist die ausgebildet ist, um das Kabel während dessen Bearbeitung durch das Schneidemodul zu fixieren.

Die modulinterne Greifeinrichtung kann ausgebildet sein, um das Kabel während dessen Bearbeitung axial und/oder radial zu fixieren.

Durch eine Fixierung des Kabels kann einerseits die Orientierung des Kabels während des Einschneidens sichergestellt und andererseits ein Verdrehen und/oder Verschieben des Kabels während des Einschneidens verhindert werden.

Die modulinterne Greifereinrichtung kann eine oder mehrere in Richtung auf die Kabelmittelachse zustellbare, beispielsweise um eine jeweilige Drehachse schwenkbare, Klemmbacken aufweisen.

Eine Fixierung des Kabels ist allerdings nicht unbedingt erforderlich, jedoch bevorzugt. Alternativ oder zusätzlich zu einer modulinternen Greifereinrichtung kann auch eine modulinterne Führungseinrichtung, beispielsweise eine Führungsbuchse, zur Führung des Kabels vorgesehen sein.

Gemäß einer Weiterbildung der Erfindung kann vorgesehen sein, dass die modulinterne Greifereinrichtung entlang einer in Richtung der Mittelachse des Rotorelements verlaufenden Zustellrichtung bewegbar ist, um das Kabel mit seiner Schnittposition an die Schneide des Rundmessers axial zuzustellen.

Die Zustellrichtung verläuft vorzugsweise parallel zu der Mittelachse des Rotorelements.

Die Zustellung der modulinternen Greifereinrichtung kann vorzugsweise über eine Linearführung erfolgen. Die Linearführung kann vorzugsweise einen schienengeführten Schlitten und einen den Schlitten bewegenden Linearmotor (oder einen sonstigen Motor) aufweisen.

Alternativ oder zusätzlich kann auch eine Bewegung des Schneidemoduls in Richtung auf das Kabel bzw. die Greifereinrichtung vorgesehen sein - dies ist in der Regel allerdings aufwändiger zu realisieren und deshalb nicht bevorzugt. Auch die manuelle Zustellung durch einen Mitarbeiter der Produktion kann grundsätzlich vorgesehen sein (allerdings ebenfalls nicht bevorzugt).

Gemäß einer Weiterbildung der Erfindung kann außerdem vorgesehen sein, dass die Vorrichtung wenigstens eine modulexterne Greifereinrichtung aufweist die ausgebildet ist, um das Kabel fixieren.

Die modulexterne Greifereinrichtung kann ausgebildet sein wie die modulinterne Greifereinrichtung. Die vorstehend und nachfolgend im Zusammenhang mit der modulinternen Greifereinrichtung beschriebenen Merkmale und Vorteile können entsprechend auf die modulexterne Greifereinrichtung übertragen werden - und umgekehrt.

Insbesondere eine Kombination aus modulinterner Greifereinrichtung und wenigstens einer modulexternen Greifereinrichtung hat sich als besonders geeignet herausgestellt, um das Kabel zwischen einzelnen Modulen der Vorrichtung zu bewegen und in die jeweiligen Module, insbesondere das Schneidemodul, zuzustellen.

In einer vorteilhaften Weiterbildung der Erfindung kann vorgesehen sein, dass die modulexterne Greifereinrichtung entlang einer zwischen einzelnen Modulen der Vorrichtung verlaufenden Transportrichtung bewegbar ist, um das Kabel zwischen zumindest zwei Modulen der Vorrichtung zu transportieren.

Es kann vorgesehen sein, dass die modulexternen Greifereinrichtungen miteinander bewegungsgekoppelt sind oder jeweils individuell entlang der Transportrichtung, beispielsweise auf einer magnetbasierten Führungsbahn, beweglich bzw. ansteuerbar sind.

In einer vorteilhaften Weiterbildung der Erfindung kann vorgesehen sein, dass die Vorrichtung ein dem Schneidemodul nachgeordnetes Trennmodul zum Abtrennen eines Endstücks der Kabelkomponente an der Schnittposition aufweist.

Dadurch, dass das Schneidemodul die mechanische Belastbarkeit der Kabelkomponente an der vorgesehenen Schnittposition definiert geschwächt hat, kann ein nachfolgendes Abtrennen des Endstücks der Kabelkomponente besonders einfach und präzise erfolgen. Aufgrund der Vorbearbeitung der Kabelkomponente durch das Schneidemodul kann im Rahmen einer automatisierten Kabelkonfektionierung somit vorteilhaft ein Trennmodul verwendet werden.

Das Trennmodul kann Mittel aufweisen, um das Kabel, die Kabelkomponente und/oder das Endstück der Kabelkomponente zu verdrehen und/oder zu verbiegen. Hierdurch kann die zuvor an der vorgesehenen Schnittposition eingebrachte Kerbe / Sollbruchstelle bzw. der Einschnitt erweitert werden, bis die Kabelkomponente schließlich vollständig an der Schnittposition abreißt.

In einer vorteilhaften Weiterbildung der Erfindung kann vorgesehen sein, dass das Trennmodul ein Greifwerkzeug aufweist das eingerichtet ist, um das abzutrennende Endstück der Kabelkomponente angrenzend an die Schnittposition zu ergreifen.

Ein Greifwerkzeug kann besonders vorteilhaft zum Entfernen bzw. Abreißen des Endstücks der Kabelkomponente verwendbar sein.

Vorzugsweise ist das Greifwerkzeug eingerichtet, um ausschließlich das Endstück der Kabelkomponente zu ergreifen. Besonders bevorzugt ist das Greifwerkzeug eingerichtet, um das Endstück der Kabelkomponente im Bereich eines vorderen Endabschnitts zu ergreifen.

Das Greifwerkzeug kann ausgebildet sein wie die modulinterne oder modulexterne Greifereinrichtung. Die vorstehend und nachfolgend im Zusammenhang mit einer der Greifereinrichtungen beschriebenen Merkmale und Vorteile können entsprechend auf das Greifwerkzeug übertragen werden - und umgekehrt.

In einer Ausgestaltung der Erfindung kann vorgesehen sein, dass das Greifwerkzeug zwei in Richtung auf die Kabelmittelachse zustellbare Greifbacken aufweist. Grundsätzlich können auch mehr als zwei Greifbacken vorgesehen sein, beispielsweise drei Greifbacken oder mehr Greifbacken oder vier Greifbacken oder noch mehr Greifbacken. Die Greifbacken können in einer linearen Bewegung auf die Kabelmittelachse zustellbar sein. Die Greifbacken können allerdings auch in einer Schwenkbewegung an die Kabelmittelachse zustellbar sein.

In einer Weiterbildung der Erfindung kann vorgesehen sein, dass das Trennmodul eine Aktuatorbaugruppe aufweist die ausgebildet ist, um das Greifwerkzeug entlang zumindest eines Rotationsfreiheitsgrades zu bewegen, während das Greifwerkzeug das Kabel fixiert.

Die Aktuatorbaugruppe kann beispielsweise einen, zwei, drei, vier oder mehr an das Kabel zustellbare Stößel aufweisen, um das Kabel zusammen mit der Kabelkomponente zu verbiegen. Die Aktuatorbaugruppe kann beispielsweise auch wenigstens einen Exzenter aufweisen, um das Kabel zusammen mit der Kabelkomponente zu verbiegen. Vorzugsweise weist die Aktuatorbaugruppe allerdings Aktoren auf, um das Greifwerkzeug zu verkippen oder zu verdrehen, während das Greifwerkzeug das Kabel fixiert - insbesondere einen Aktor für jeden Freiheitsgrad (vorzugsweise sind genau zwei Aktoren vorgesehen).

Die Aktuatorbaugruppe kann eingerichtet sein, um das Kabel zusammen mit der Kabelkomponente entlang wenigstens eines Freiheitsgrades, vorzugsweise entlang zumindest zweier Freiheitsgrade, zu verbiegen.

In einer vorteilhaften Ausgestaltung der Erfindung kann vorgesehen sein, dass die Aktuatorbaugruppe eingerichtet ist, um das Greifwerkzeug entlang zumindest eines Rotationsfreiheitsgrades (relativ zu der Kabelmittelachse) zu verkippen, während das Greifwerkzeug das Kabel bzw. die Kabelkomponente bzw. das Endstück der Kabelkomponente fixiert.

Eine mechanische Beanspruchung der Kabelkomponente an der Schnittposition kann insbesondere vorteilhaft über das Greifwerkzeug in das Kabel bzw. in die Kabelkomponente / das Endstück der Kabelkomponente eingeleitet werden. Die Aktuatorbaugruppe kann somit vorteilhaft mit dem Greifwerkzeug, beispielsweise mit den Greifbacken, gekoppelt sein.

Es kann vorgesehen sein, dass das Trennmodul alternativ oder zusätzlich zu dem Greifwerkzeug und/oder zu der Aktuatorbaugruppe auch noch weitere Mittel aufweist, um das Endstück der Kabelkomponente entlang der vorgesehenen Schnittposition abzutrennen. Beispielsweise kann eine Sonotrode verwendet werden, um hochfrequente mechanische Schwingungen in das Kabel bzw. in die Kabelkomponente einzuleiten und das Kabel bzw. die Kabelkomponente in Resonanzschwingungen zu versetzen. Alternativ oder zusätzlich können auch Schwingungsförderer und sonstige Vibrationseinrichtungen vorgesehen sein, um das Abtrennen des Endstücks der Kabelkomponente auszulösen und/oder zumindest zu unterstützen. Auch ein Luftstrom, beispielsweise durch impulsgesteuerte Druckluft (saugend und/oder blasend) kann zum Abtrennen des Endstücks der Kabelkomponente an der zuvor mit dem Rundmesser mechanisch geschwächten Schnittposition vorgesehen sein.

Es kann vorgesehen sein, dass das Endstück der Kabelkomponente nach dem Abtrennen durch das Trennmodul von dem Kabel abgezogen wird. Das Endstück der Kabelkomponente kann allerdings auch von dem Kabel entfernt werden, indem das Endstück abgebürstet, abgeblasen, abgewickelt, abgestreift und/oder zusammen mit einem zuvor teilabgezogenen Kabelmantelstück abgezogen wird.

In einer vorteilhaften Weiterbildung der Erfindung kann vorgesehen sein, dass die Vorrichtung ein dem Schneidemodul, vorzugsweise dem Trennmodul, nachgeordnetes Reinigungsmodul zum Entfernen von an dem Kabel anhaftenden Partikeln aufweist.

Der Einsatz des Reinigungsmoduls kann eine hohe Qualität der Konfektionierung sicherzustellen und Fehlerquellen in dem fertigen Produkt ausschließen (insbesondere Kurzschlüsse durch metallische Folienpartikel, mechanische Blockade und Undichtigkeiten). Durch das Reinigungsmodul kann die technische Sauberkeit im Rahmen der Konfektionierung des elektrischen Kabels sichergestellt werden.

Grundsätzlich kann der Reinigungsprozess auf verschiedene Arten realisiert bzw. umgesetzt werden. Es eignen sich aber insbesondere beliebige Kombinationen der nachfolgenden Varianten, gegebenenfalls aber auch Einzellösungen.

Gemäß einer Ausgestaltung kann vorgesehen sein, dass der Reinigungsprozess ein Abblasen der Partikel (beispielsweise Folienreste) umfasst. Beispielsweise können Partikel mit einem starken Luftstrahl abgeblasen werden. Gemäß einer Ausgestaltung kann beispielsweise vorgesehen sein, dass das elektrische Kabel in eine Ringdüse eingeführt wird, wonach die Partikel bzw. Folienreste mittels der Ringdüse abgeblasen werden. Die Ringdüse kann einen oder mehrere Zuflüsse für die Luftversorgung aufweisen. Beispielsweise kann ein einziger Zufluss oder können zwei Zuflüsse vorgesehen sein. Es kann vorgesehen sein, dass die Ringdüse mehrere einzelne Luftauslässe/Düsen oder einen vollständig oder zumindest teilweise ringförmig umlaufende Luftauslass in der Art eines Ringspalts aufweist. Auch wenn eine Ringdüse besonders bevorzugt ist, kann auch eine herkömmliche Luftdüse oder können mehrere Luftdüsen vorgesehen sein, um die Partikel zielgenauer und mit höherer Flexibilität entfernen zu können. Beispielsweise kann eine Flachstrahldüse vorgesehen sein.

Um zu vermeiden, dass die Partikel unkontrolliert weggeschleudert und somit beispielsweise an eine andere Stelle der Fertigungsstraße verschleppt werden, kann es von Vorteil sein, die Partikel zielgerichtet auf einen Auffangbehälter und/oder auf eine Filtereinheit abzublasen.

In einer vorteilhaften Ausgestaltung kann vorgesehen sein, dass der Reinigungsprozess ein Absaugen der Partikel umfasst. Zum Absaugen kann eine Runddüse, eine Flachstrahldüse oder eine sonstige Düse vorgesehen sein.

In einer Ausgestaltung kann vorgesehen sein, dass ein im Rahmen des Reinigungsprozesses erzeugter Luftstrom impulsgesteuert wird. Ein impulsgesteuerter Luftstrom kann sich beispielsweise zum Abblasen und/oder zum Absaugen eignen. Durch den gepulsten Luftstrahl können die Partikel besser von der Oberfläche entfernt werden, da sich diese zunächst lockern. Durch das Pulsen kann außerdem eine turbulente Luftströmung entstehen, die das Ablösen der Partikel von dem elektrischen Kabel oder den auf dem Kabel im Rahmen der Konfektionierung aufgebrachten Bauteilen unterstützt.

In einer vorteilhaften Ausgestaltung kann vorgesehen sein, dass dem Kabelende während des Reinigungsprozesses ionisierte Luft zugeführt wird, um die elektrostatische Anziehungskraft der Partikel zu verringern. Das gezielte Reduzieren der Elektrostatik kann insbesondere zum Entfernen von Partikeln aus einem Kunststoff vorteilhaft sein.

Um Ladungen von den Partikeln und/oder von dem Kabel abzuführen, können beispielsweise die im Rahmen der Konfektionierung mit den Partikeln in direkten Kontakt kommenden Komponenten der Vorrichtung leitfähig und geerdet ausgebildet sein (beispielsweise Bürsten).

In einer Ausgestaltung kann vorgesehen sein, dass das Kabelende während des Reinigungsprozesses definierten Vibrationen ausgesetzt wird, um die Partikel zu lockern. Durch die Vibrationen können sich Mikroverhakungen lösen und die Partikel anschließend leichter entfernt werden. Beispielsweise kann sich ein Vibrationsverfahren besonders gut in Kombination mit einem Abblasen oder Absaugen der Partikel eignen. Es kann von Vorteil sein, die Vibrationen möglichst nahe an der Verschmutzung einzuleiten.

In einer Ausgestaltung kann außerdem vorgesehen sein, magnetische Partikel unter Verwendung eines oder mehrerer Magnete (Permanentmagnete und/oder Elektromagnete) durch magnetische Anziehungskraft zu entfernen.

Gemäß einer Ausgestaltung der Erfindung kann vorgesehen sein, dass die Vorrichtung ein Qualitätsüberwachungsmodul zur Prüfung der Bearbeitungsqualität oder des Bearbeitungszustandes des Kabels aufweist.

Eine möglichst umfassende Qualitätsüberwachung kann insbesondere im Rahmen einer voll- oder teilautomatisierten Kabelkonfektionierung im Rahmen einer Massenfertigung vorteilhaft sein. Durch eine Qualitätsüberwachung kann beispielsweise die Kabelkonfektionierung transparent und für den Endkunden nachvollziehbar gestaltet werden. Es kann vorgesehen sein, dass der Zustand wenigstens eines Kabelendes des Kabels nach dem Entfernen des Endstücks der Kabelkomponente, insbesondere nach einer vorhergehenden Reinigung durch das Reinigungsmodul, erfolgt.

Das Qualitätsüberwachungsmodul kann grundsätzlich an einer beliebigen Stelle oder an mehreren Stellen der Kabelbearbeitung vorgesehen sein. Es kann beispielsweise auch ein Qualitätsüberwachungsmodul oder zumindest eine optische Überprüfung des Kabelendes einem Modul, beispielsweise dem Schneidemodul, der Vorrichtung vorgeordnet sein. Beispielsweise kann zumindest ein optischer Sensor in einem Kabelaufnahmebereich des Schneidemoduls angeordnet sein, wodurch das Kabelende, bevor, während oder nachdem es in das Schneidemodul zugestellt wird/wurde, von dem Qualitätsüberwachungsmodul oder von dem optischen Sensor überprüft werden kann.

Im Bedarfsfall kann das geprüfte Kabel, sollte es die geforderte Qualität oder den geforderten Bearbeitungszustand nicht aufweisen, aus der Produktion aussortiert oder zur Nachbearbeitung gekennzeichnet werden. Das Ergebnis der Qualitätsüberwachung kann optional auf dem Kabel, auf einem dem Kabel zugeordneten Werkstückträger und/oder in einer Datenbank dem Kabel zuordenbar festgehalten bzw. gespeichert werden.

In einer vorteilhaften Weiterbildung der Erfindung kann vorgesehen sein, dass die Vorrichtung ein dem Schneidemodul vorgeordnetes Kabelschirmbearbeitungsmodul zum Ablängen und/oder Umlegen eines ausgehend von einem vorderen Kabelende bis zu einer Abisolierposition freigelegten Kabelschirmgeflechts des Kabels aufweist.

Grundsätzlich kann das Kabelschirmbearbeitungsmodul zum Ablängen und/oder Umlegen des Kabelschirmgeflechts des Kabels auch dem Schneidemodul nachgeordnet sein.

Bei der Abisolierposition kann es sich insbesondere um eine Position entlang der Kabelmittelachse des Kabels handeln, ab der der Kabelmantel des Kabels abisoliert ist. Bei der Abisolierposition kann es sich somit insbesondere um die axiale Position entlang der Kabelmittelachse des Kabels handeln, ab der der Kabelmantel ausgehend von dem vorderen Kabelende wieder vorhanden ist.

In einer vorteilhaften Weiterbildung der Erfindung kann vorgesehen sein, dass das Kabelschirmbearbeitungsmodul wenigstens eine antreibbare Bürste aufweist die eingerichtet ist, um das Kabelschirmgeflecht des Kabels durch Bürsten ausgehend von dem vorderen Kabelende in Richtung auf ein dem vorderen Kabelende gegenüberliegendes Kabelende umzulegen.

Ein Bürsten des Kabelschirmgeflechts zum Umlegen des Kabelschirmgeflechts kann sich besonders vorteilhaft für verschiedene Kabelarten bzw. Kabelgeometrien eignen und damit auch unabhängig von der spezifischen Kabelart zu einem guten Ergebnis führen. Das "Umbürsten" des Kabelschirmgeflechts kann selbst bei ovalen Kabelgeometrien, beispielsweise bei Datenleitungen mit einer Anzahl Innenleiter, bei der sich die Innenleiter nicht symmetrisch in dem Kabel verteilen lassen, gut eignen (z. B. bei einem Datenkabel mit genau zwei Innenleitern).

In einer vorteilhaften Ausgestaltung können wenigstens zwei antreibbare Bürsten oder mehr Bürsten, wenigstens drei antreibbare Bürsten oder mehr Bürsten wenigstens vier antreibbare Bürsten oder noch mehr Bürsten verwendet werden. Die Verwendung von genau zwei Bürsten ist besonders bevorzugt, da sich anhand von Versuchsreihen gezeigt hat, dass bereits mit zwei Bürsten ein ausreichendes Bürstergebnis zum Umlegen des Kabelschirmgeflechts erreichbar sein kann.

Es kann gegebenenfalls vorgesehen sein, dass das Kabel während des Bürstens um die Kabelmittelachse gedreht wird und/oder dass die wenigstens eine Bürste während des Bürstens um den Umfang des Kabels herum gedreht wird, um eine möglichst vollumfängliche Bearbeitung zu gewährleisten. Ein Drehen des Kabels / der Bürste(n) kann insbesondere bei einer geringen Anzahl Bürsten vorteilhaft sein.

In einer Ausgestaltung kann vorgesehen sein, dass die wenigstens eine antreibbare Bürste vor und/oder während des Bürstens in Richtung auf die Kabelmittelachse des Kabels zugestellt wird.

In einer Ausgestaltung kann außerdem vorgesehen sein, dass das Kabelschirmgeflecht während des Bürstens bzw. während des Umlegens des Kabelschirmgeflechts entlang der wenigstens einen Bürste (beispielsweise zwischen den Bürsten hindurch) bewegt wird und/oder dass die wenigstens eine Bürste entlang der Kabelmittelachse des Kabels über das Kabel bewegt wird.

In einer Ausgestaltung kann vorgesehen sein, dass die Bürsten als Rundbürsten ausgebildet sind. Unter einer Rundbürste können beliebige Bürsten verstanden werden, die sich um eine Mittelachse antreiben lassen, beispielsweise auch sogenannte Topfbürsten und Kegelbürsten. Die Rundbürsten müssen nicht vollständig rund sein sondern können z. B. auch oval ausgebildet sein. Grundsätzlich können beliebige Bürsten vorgesehen sein, beispielsweise auch Bürsten, die eine Linearbewegung durchführen, oder umlaufende Bürsten. Es kann vorgesehen sein, dass die Bürsten einen Nylonbesatz aufweisen. Grundsätzlich kann sich allerdings ein beliebiger Bürstenbesatz eignen, beispielsweise auch ein Bürstenbesatz aus Naturfasern, aus Kunstfasern oder aus Draht. Der Fachmann kann einen zum Bürsten des Kabelschirmgeflechts geeigneten Besatz anwendungsbedingt und in Abhängigkeit des Materials des Kabelschirmgeflechts auswählen.

Es kann vorgesehen sein, dass das Kabel während des Bürstens bzw. während des Umlegens des Kabelschirmgeflechts verdrehsicher fixiert wird, beispielsweise mittels der Fixiereinrichtung. Auch eine axiale Sicherung des elektrischen Kabels, beispielsweise mittels der Fixiereinrichtung, dauerhaft oder nur während bestimmter Bearbeitungsschritte, ist möglich.

Es kann vorgesehen sein, dass das Kabelschirmbearbeitungsmodul eine Steuereinrichtung aufweist die eingerichtet ist, um eine definierte Umlegeposition für das Kabelschirmgeflecht entlang der Kabelmittelachse zu bestimmen.

Bei der Umlegeposition handelt es sich um die Position entlang der Kabelmittelachse des Kabels, ausgehend von der das Kabelschirmgeflecht umgelegt bzw. zum Umlegen umgeknickt wird. Insbesondere kann es sich bei der Umlegeposition um den Wendepunkt des Verlaufs des umgelegten Kabelschirmgeflechts handeln, an dem das Kabelschirmgeflecht seinen Verlauf in Richtung auf das hintere Kabelende umkehrt.

Es kann vorgesehen sein, dass das Kabelschirmbearbeitungsmodul eine Zustelleinrichtung aufweist die eingerichtet ist, um eine Formhülse auf das Kabel aufzubringen und mit einem dem vorderen Kabelende zugewandten, vorderen Ende an der Umlegeposition zu positionieren.

Durch die Formhülse kann die Form des Umlegebereichs des Kabelschirmgeflechts vorteilhaft vorgegeben werden. Durch die Verwendung der Formhülse kann außerdem die Flexibilität beim Umlegen des Kabelschirmgeflechts erhöht sein, da das Kabelschirmgeflecht nicht mehr zwingend unmittelbar auf das Kabel bzw. auf dessen Kabelmantel oder auf eine Steckverbinderkomponente des späteren Steckverbinders umgelegt werden muss.

Wenn beispielsweise eine auf dem Kabel vormontierte Stützhülse des späteren Steckverbinders einen axialen Längsschlitz aufweist, kann es in der Praxis vorkommen, dass Einzeldrähte des Kabelschirmgeflechts beim Umlegen in den Längsschlitz eindringen und durch den damit einhergehenden Längengewinn undefiniert über das hintere Ende der Stützhülse hinausragen. Dies gilt es zur Gewährleistung guter elektrischer Eigenschaften und zur Vermeidung von Kurzschlüssen im Rahmen der Montage des Steckverbinders zu vermeiden.

Durch die Formhülse kann die radiale Distanz bzw. der Abstand des umgelegten Kabelschirmgeflechts zu dem Kabelmantel des Kabels oder einer auf dem Kabelmantel vormontierten Steckverbinderkomponente des Steckverbinders vorgegeben bzw. beeinflusst werden.

Durch die Formhülse kann außerdem auch die axiale Umlegeposition entlang der Kabelmittelachse durch Positionierung des vorderen Endes der Formhülse vorgegeben werden.

In einer Ausgestaltung kann vorgesehen sein, dass die Formhülse von einem auf dem zu bearbeitenden Kabelende zu montierenden elektrischen Steckverbinder unabhängig ist. Bei der Formhülse handelt es sich somit vorzugsweise nicht um einen Bestandteil des späteren Steckverbinders. Die Formhülse ist vorzugsweise lediglich ein Bestandteil des Kabelschirmbearbeitungsmoduls und kann damit vorteilhaft zum Umlegen des Kabelschirmgeflechts verwendet werden. In einer vorteilhaften Ausgestaltung kann vorgesehen sein, dass die Formhülse wieder von dem Kabel entfernt wird, nachdem das Kabelschirmgeflecht auf die Formhülse umgelegt wurde. Die Formhülse kann vorzugsweise zerstörungsfrei von dem Kabel entfernt werden.

In einer vorteilhaften Ausgestaltung der Erfindung kann vorgesehen sein, dass die Formhülse einen runden Querschnitt aufweist. Grundsätzlich kann die Formhülse allerdings auch einen ovalen, einen rechteckigen oder einen sonstigen Querschnitt aufweisen. Die Geometrie kann dabei vorzugsweise der Geometrie des Kabelmantels oder einer auf und/oder unter dem umgelegten Kabelschirmgeflecht zu montierenden Steckverbinderkomponente entsprechen oder zumindest näherungsweise entsprechen. Da die auf oder unter dem Kabelschirmgeflecht zu montierenden Steckverbinderkomponenten in der Regel eine runde Innen- oder Außengeometrie aufweisen, ist eine runde Formhülse in der Regel vorteilhaft.

In einer Ausgestaltung kann vorgesehen sein, dass sich die Formhülse in Richtung auf das vordere Ende verjüngt. Die Formhülse kann sich auch nur abschnittsweise verjüngen. Hierdurch können beispielsweise nach dem Umlegen weitere Steckverbinderkomponenten oder eine Matrize zum Schneiden des Kabelschirmgeflechts ausgehend von dem hinteren Kabelende besonders einfach unter das Kabelschirmgeflecht eingeschoben werden.

Besonders bevorzugt verjüngt sich die Formhülse allerdings nicht und ist hingegen ausgebildet, um das Kabelschirmgeflecht vollständig nach hinten umzulegen, gegebenenfalls sogar über eine stirnseitige Ausbauchung der Formhülse umzulegen. Diese Variante eignet sich insbesondere dann, wenn das Kabelschirmgeflecht nach dem Umlegen nicht mehr geschnitten werden muss, z. B. wenn die Dimensionen des Steckverbinders bereits auf die nach dem Abisolieren und Umlegen verbleibende Länge des Kabelschirmgeflechts abgestimmt sind.

Gemäß einer Ausgestaltung kann vorgesehen sein, dass die Formhülse aus zwei Halbschalen oder mehr Halbschalen ausgebildet ist, die in Richtung auf die Kabelmittelachse zugestellt werden, um die Formhülse auf das Kabel aufzubringen. Die Formhülse kann aber auch einteilig ausgebildet sein, insbesondere in der Art eines Rohres.

In einer vorteilhaften Ausgestaltung kann vorgesehen sein, dass die Formhülse über einer auf dem Kabel vormontierten Steckverbinderkomponente eines elektrischen Steckverbinders auf das Kabel aufgebracht wird, vorzugsweise über einer (axial geschlitzten) Stützhülse des Steckverbinders. Die Formhülse kann somit die Steckverbinderkomponente des späteren Steckverbinders, beispielsweise die axial geschlitzte Stützhülse des Steckverbinders, während des Umbürstens des Kabelschirmgeflechts abdecken. Unvorteilhafte Konturen und Bereiche der Steckverbinderkomponente, beispielsweise ein axialer Längsschlitz, können somit das Umlegen des Kabelschirmgeflechts nicht mehr negativ beeinflussen. Außerdem können die Steckverbinderkomponenten durch die Formhülse vor den rotierenden Bürsten geschützt werden.

In einer Ausgestaltung der Erfindung kann vorgesehen sein, dass die Umlegeposition von der Abisolierposition abweicht.

Die Umlegeposition kann somit vorteilhaft unabhängig von der Abisolierposition variiert werden. Hierdurch können beispielsweise Toleranzen bei der Abisolierposition oder bei der Montageposition einer Steckverbinderkomponente berücksichtigt und ausgeglichen werden. Außerdem hat sich überraschend herausgestellt, dass die Kontaktierung des Kabelschirmgeflechts mit einer Steckverbinderkomponente, beispielsweise einer Stütz- oder Crimphülse, verbessert sein kann, wenn die Umlegeposition des Kabelschirmgeflechts nicht unmittelbar der Abisolierposition entspricht.

In einer vorteilhaften Ausgestaltung kann vorgesehen sein, dass die Umlegeposition derart bestimmt wird, dass die Umlegeposition entlang der Kabelmittelachse des Kabels näher an dem zu bearbeitenden Kabelende abgeordnet ist als die Abisolierposition. Die Umlegeposition kann somit entlang der Kabelmittelachse weiter "vorne" sein als die Abisolierposition. Somit kann beim Umlegen des Kabelschirmgeflechts ein Abstand zu der Abisolierposition eingehalten werden. Dies kann insbesondere für die Montage eines Steckverbinders für die Hochfrequenztechnik von Vorteil sein, da die Kontaktierung eines Außenleiterkontakts des Steckverbinders mit dem Kabelschirmgeflecht des Kabels dann weiter vorne an dem Kabel stattfinden kann. Grundsätzlich kann allerdings auch vorgesehen sein, dass die Umlegeposition der Abisolierposition entspricht. Auch eine zurückversetzte Umlegeposition hinter der Abisolierposition kann in Sonderfällen vorgesehen sein, beispielsweise um das Kabelschirmgeflecht stufenförmig umzulegen.

Gemäß einer Ausgestaltung kann vorgesehen sein, dass die Umlegeposition in Abhängigkeit von einer Montageposition einer auf dem Kabel vormontierten Steckverbinderkomponente eines elektrischen Steckverbinders bestimmt wird. Hierdurch können Toleranzen bei der Montageposition der Steckverbinderkomponente ausgeglichen werden. Insbesondere kann dadurch vermieden werden, dass das umgelegte Kabelschirmgeflecht nach hinten über die Steckverbinderkomponente hinausragt - selbst wenn die Montageposition der Steckverbinderkomponente entlang der Kabelmittelachse hohen Toleranzen unterliegt.

Gemäß einer Ausgestaltung kann vorgesehen sein, dass die Umlegeposition in Abhängigkeit von der Abisolierposition bestimmt wird. Es kann beispielsweise vorgesehen sein, die Umlegeposition in einem definierten Abstand zu der Abisolierposition festzulegen, beispielsweise 0,1 mm bis 5,0 mm versetzt zu der Abisolierposition festzulegen, vorzugsweise 0,1 mm bis 2,0 mm versetzt zu der Abisolierposition festzulegen, ganz besonders bevorzugt 0,1 mm bis 1,0 mm versetzt zu der Abisolierposition festzulegen.

In einer vorteilhaften Ausgestaltung der Erfindung kann vorgesehen sein, dass die Formhülse eine stirnseitige Anschlagfläche für das Kabelschirmgeflecht aufweist.

Eine stirnseitige Anschlagfläche der Formhülse kann eine Kontaktierung des Kabelschirmgeflechts mit beispielsweise einer Stütz-, Press- oder Crimphülse oder einer sonstigen Steckverbinderkomponente verbessern, da das umgelegte Kabelschirmgeflecht dann dem Verlauf der Anschlagfläche folgt und eine "gefederte" bzw. elastische stirnseitige Kontaktierung mit der Steckverbinderkomponente ausbilden kann.

Die stirnseitige Anschlagfläche der Formhülse bildet vorzugsweise eine definierte Kante zum Umlegen des Kabelschirmgeflechts aus. In einer Ausgestaltung kann vorgesehen sein, dass die stirnseitige Anschlagfläche der Formhülse zumindest abschnittsweise orthogonal zu der Kabelmittelachse verläuft, wenn die Formhülse auf das Kabel aufgebracht ist. Es kann allerdings auch eine nicht orthogonale Ausrichtung der stirnseitigen Anschlagfläche vorgesehen sein, beispielsweise eine beliebige winklige Ausrichtung der Anschlagfläche zu der Kabelmittelachse.

In einer vorteilhaften Ausgestaltung kann vorgesehen sein, dass die Formhülse an dem vorderen Ende eine Fase und/oder einen Übergangsradius aufweist, vorzugsweise zwischen der stirnseitigen Anschlagfläche und einer Seitenfläche der Formhülse. Eine Fase und/oder ein Übergangsradius kann das Bürstergebnis beim Umlegen des Kabelschirmgeflechts noch verbessern und außerdem die Belastung des Kabelschirmgeflechts durch ein scharfes Abknicken verringern.

Gemäß einer Ausgestaltung der Erfindung kann vorgesehen sein, dass das Kabelschirmbearbeitungsmodul eine Matrize mit einer Anlage für das Kabelschirmgeflecht und eine Stanzeinrichtung aufweist, wobei die Stanzeinrichtung das an der Anlage der Matrize anliegende Kabelschirmgeflecht abzutrennen vermag.

Die Matrize kann eine Durchgangsbohrung zur Durchführung des Kabels aufweisen. Die Matrize kann entlang der Kabelmittelachse in Richtung auf das vordere Kabelende zustellbar sein, um das im Rahmen der Kabelschirmbearbeitung zuvor zumindest teilweise umgelegte Kabelschirmgeflecht stirnseitig an der Anlage anzulegen. Die Matrize kann somit als Anlage für einen anschließenden Scherschnitt dienen.

Mittels der Stanzeinrichtung kann ein Scher- oder Stanzschnitt durchgeführt werden. Bedarfsweise kann anschließend ein Feinschnitt erfolgen, um alle Einzeldrähte des Kabelschirmgeflechts zuverlässig abzuschneiden.

Gemäß einer Weiterbildung der Erfindung kann vorgesehen sein, dass die Kabelkomponente eine Kabelfolie, ein Kabelmantel und/oder ein Dielektrikum ist. Grundsätzlich kann erfindungsgemäß eine beliebige Kabelkomponente bearbeitet werden.

Gemäß einer Weiterbildung der Erfindung kann vorgesehen sein, dass das Kabel einen asymmetrischen Querschnitt aufweist. Die Erfindung eignet sich insbesondere auch gut zur Bearbeitung von Flachbandkabeln.

Die Konfektionierung des Kabels kann vorteilhaft auf einzelne Bearbeitungsschritte und/oder Module aufgeteilt sein, beispielsweise auf die vorstehend und nachfolgend genannten Module.

Die Verteilung der Konfektionierung auf mehrere Module oder Bearbeitungsschritte ermöglicht es, die Vorrichtung als "Fließbandprozess" bzw. als "Taktautomat" mit aufeinanderfolgenden Einzelschritten zu betreiben, um die Bearbeitungszeit bei einer Massenabfertigung zu reduzieren. Die Vorrichtung kann außerdem modular aufgebaut sein, wodurch einzelne Module ohne großen Aufwand ersetzt, modifiziert oder entfernt werden können. Hierdurch kann die Vorrichtung, insbesondere für die Bearbeitung verschiedener Kabelarten, mit einfachen Mitteln konfigurierbar sein.

Die erfindungsgemäße Vorrichtung kann gegebenenfalls auch ausschließlich das Schneidemodul und ansonsten keine weiteren Module aufweisen.

Die Erfindung betrifft auch ein Verfahren zur Konfektionierung eines elektrischen Kabels, wonach eine Kabelkomponente des Kabels an einer vorgesehenen Schnittposition eingeschnitten wird. Erfindungsgemäß ist vorgesehen, dass ein Rundmesser, das eine runde Schneide aufweist, von einem angetriebenen Rotorelement zum Einschneiden in die Kabelkomponente exzentrisch um den Umfang der Kabelkomponente herum geführt wird. Das Rotorelement weist eine zentrale Ausnehmung auf, in der ein relativ zu dem Rotorelement feststehendes Schablonenelement koaxial angeordnet ist, wobei das Schablonenelement den Querschnittsverlauf der Kabelkomponente nachbildet.

Das Rundmesser kann Teil eines Schneidemoduls sein, insbesondere des vorstehend und nachfolgend beschriebenen Schneidemoduls der erfindungsgemäßen Vorrichtung.

In einer vorteilhaften Weiterbildung der Erfindung kann vorgesehen sein, dass die Kabelkomponente zumindest teilringförmig, vollständig oder abschnittsweise entlang des Umfangs des Kabels eingeschnitten wird.

Beispielsweise kann vorgesehen sein, dass der Schnitt symmetrisch umlaufend entlang des Umfangs der Kabelkomponente gesetzt wird.

In einer Weiterbildung der Erfindung kann vorgesehen sein, dass die Kabelkomponente derart eingeschnitten wird, dass sich ein Riss zumindest durch eine Außenschicht der Kabelkomponente ausbildet.

Es kann beispielsweise vorgesehen sein, dass ein Riss teilringförmig, vollständig oder abschnittsweise umlaufend entlang des Umfangs der Kabelkomponente und/oder entlang der Kabelmittelachse lediglich in die Außenschicht oder in einen Teil der Außenschicht eingebracht wird. Es kann aber auch vorgesehen sein, dass ein Riss teilringförmig, vollständig oder abschnittsweise umlaufend entlang des Umfangs der Kabelkomponente und/oder entlang der Kabelmittelachse in Radialrichtung vollständig durch die Kabelkomponente, d. h. durch die Außenschicht und durch die Innenschicht, eingebracht wird. Auch ein Riss, der nur teilweise in die Innenschicht der Kabelkomponente eindringt, ist möglich.

Ein Riss bzw. Einschnitt / eine Kerbe in der Kabelkomponente kann eine geeignete Sollbruchstelle darstellen und die mechanische Belastbarkeit der Kabelkomponente an der Schnittposition in gewünschtem Maße reduzieren. Die Art des Schnitts, d. h. Länge, Tiefe und Breite sowie gegebenenfalls auch die Anzahl der Schnitte, kann der Fachmann anwendungsspezifisch festlegen.

Die Erfindung betrifft auch ein Computerprogrammprodukt mit Programmcodemitteln, um ein Verfahren gemäß den vorstehenden und nachfolgenden Ausführungen durchzuführen, wenn das Programm auf einer Steuereinrichtung einer Vorrichtung zur Konfektionierung eines Kabels ausgeführt wird.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Die Erfindung betrifft auch ein elektrisches Kabel, bearbeitet nach einem Verfahren oder mit einer Vorrichtung gemäß den vorstehenden und nachfolgenden Ausführungen.

Die Erfindung kann sich besonders vorteilhaft zur Konfektionierung eines Kabels für die Datenübertragung (Datenleitung), insbesondere für die Hochfrequenztechnik, eignen.

Merkmale, die im Zusammenhang mit einem der Gegenstände der Erfindung, namentlich gegeben durch die erfindungsgemäße Vorrichtung, das erfindungsgemäße Verfahren, das Computerprogrammprodukt und das elektrische Kabel beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielswiese ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Vorrichtung zur Konfektionierung eines elektrischen Kabels, aufweisend ein exzentrisch um die Kabelmittelachse des Kabels drehbares Messer zum Einschneiden in zumindest eine Kabelkomponente des Kabels an einer vorgesehenen Schnittposition. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser Vorrichtung.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: das Schneidemodul einer erfindungsgemäßen Vorrichtung in einer perspektivischen Darstellung zusammen mit dem zu bearbeitenden elektrischen Kabel;
- Figur 2: eine perspektivische Darstellung eines beispielhaften zu konfektionierenden elektrischen Kabels;
- Figur 3: die modulinterne Greifereinrichtung des Schneidemoduls der Figur 1 in einer perspektivischen Detailansicht;
- Figur 4: das Rundmesser des Schneidemoduls der Figur 1 in einer perspektivischen Einzeldarstellung;
- Figur 5: das Zusammenspiel aus Lagerplatte, Führungseinrichtung, Stützkörper, Federelement, Betätigungsglied und Aktuator zur Zustellung des Rundmessers an die Mittelachse des Kabels in einer perspektivischen Detailansicht;
- Figur 6: die Lagerplatte, die Führungseinrichtung, den Stützkörper, das Federelement, das Betätigungsglied und den Aktuator in einer Detailansicht von vorne in einem von der Kabelmittelachse entfernten Zustand des Rundmessers;
- Figur 7: die Lagerplatte, die Führungseinrichtung, den Stützkörper, das Federelement, das Betätigungsglied und den Aktuator in einer Detailansicht von vorne in einem an die Kabelmittelachse zugestellten Zustand des Rundmessers;
- Figur 8: eine weitere perspektivische Detailansicht der Lagerplatte, der Führungseinrichtung, des Stützkörpers, des Federelements, des Betätigungsglieds und des Aktuators;
- Figur 9: eine perspektivische Detailansicht des Rotorelements und des Rundmessers;
- Figur 10: eine perspektivische Detailansicht des Rotorelements;
- Figur 11: eine erfindungsgemäße Vorrichtung mit einer Transporteinrichtung, mehreren modulinternen und modulexternen Greifereinrichtungen und verschiedenen Modulen zur Konfektionierung des Kabels;
- Figur 12: ein beispielhaftes Trennmodul mit einem Greifwerkzeug und einer Aktuatorbaugruppe zum Bewegen des Greifwerkzeugs, während das Greifwerkzeug das Endstück der Kabelfolie fixiert; und
- Figur 13: ein Kabelschirmbearbeitungsmodul mit zwei Bürsten zum Umlegen des Kabelschirmgeflechts.

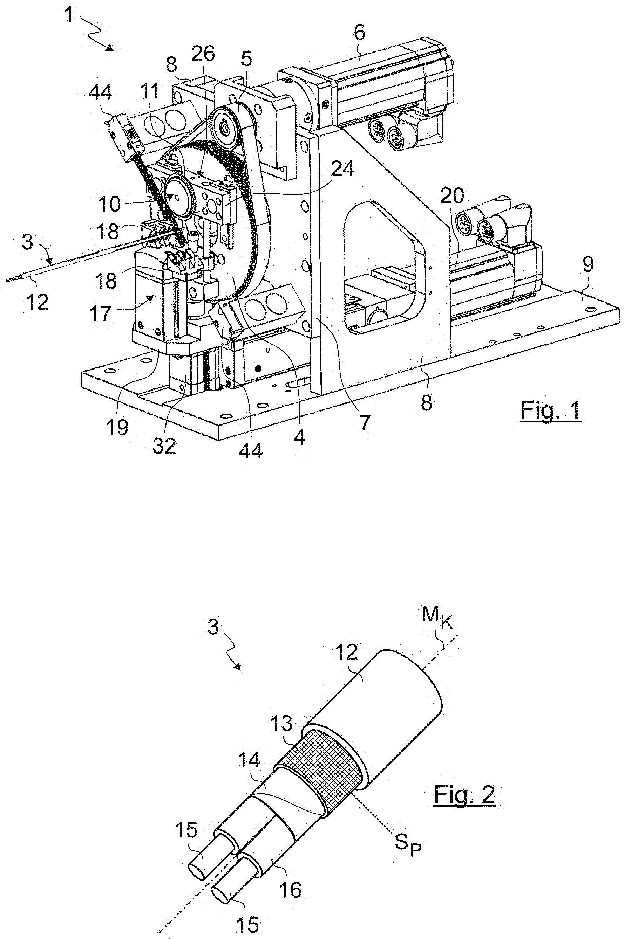

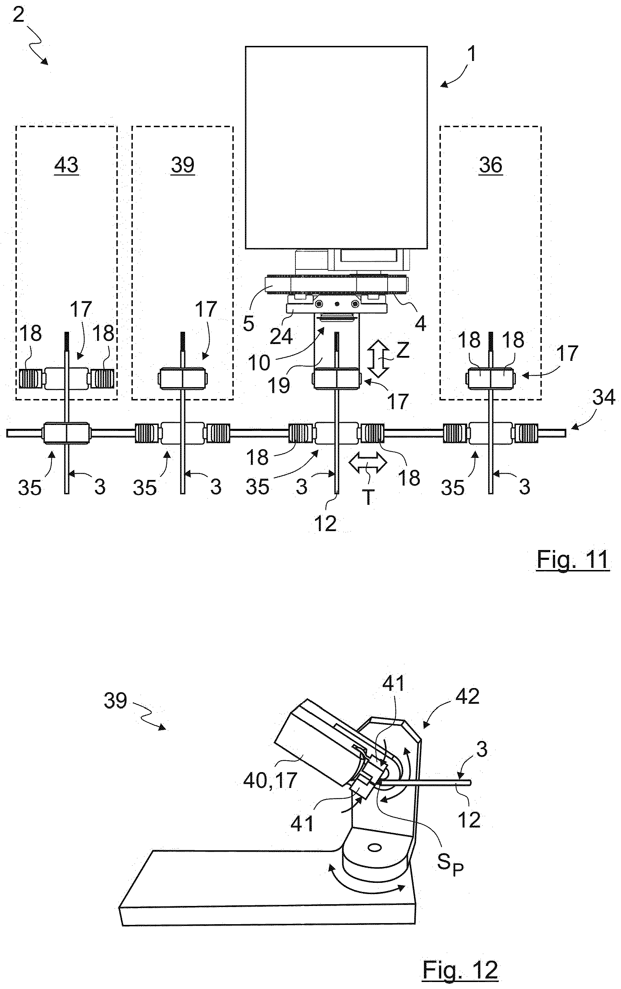

Figur 1 zeigt ein Schneidemodul 1 einer erfindungsgemäßen Vorrichtung 2 (vgl. Figur 11) zur Konfektionierung eines elektrischen Kabels 3. Das Schneidemodul 1 ist ausgebildet, um die mechanische Belastbarkeit einer Kabelkomponente 12, 13, 14, 16 des Kabels 3 an einer vorgesehenen Schnittposition S_{P} (vgl. die Figuren 2 und 12) zu reduzieren. Hierzu wird die Kabelkomponente 12, 13, 14, 16 an der Schnittposition S_{P} entlang des Umfangs umlaufend eingeschnitten.

Das Schneidemodul 1 weist ein antreibbares Rotorelement 4 auf. In den Ausführungsbeispielen ist das Rotorelement 4 als Zahnriemenrad ausgebildet. Zum Antrieb des Rotorelements 4 ist dieses über einen Zahnriemen 5 mit einem Elektromotor 6, insbesondere einem Servomotor, mechanisch gekoppelt.

Das Schneidemodul 1 weist eine Frontplatte 7 auf, an der das Rotorelement 4 drehbar gelagert ist, sowie zwei Seitenteile 8 und eine Basisplatte 9, auf denen die einzelnen Komponenten des Schneidemoduls 1 angeordnet sind.

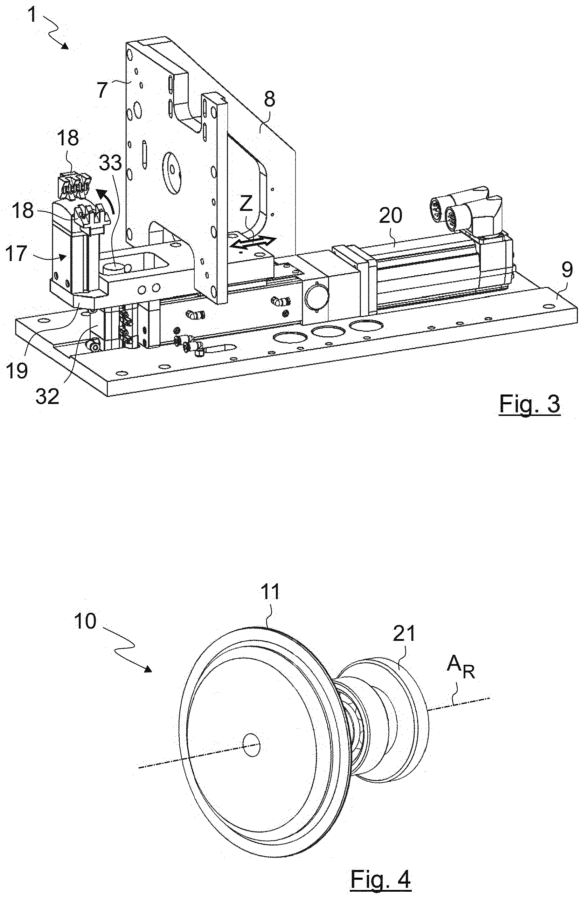

An dem Rotorelement 4 ist ein Rundmesser 10, das eine runde Schneide 11 aufweist, mit seiner Drehachse A_{R} (vgl. Figur 4) exzentrisch gehalten. Zum Einschneiden in die Kabelkomponente 12, 13, 14, 16 kann das Rundmesser 10 durch eine Drehbewegung des Rotorelements 4 um den Umfang der Kabelkomponente 12, 13, 14, 16 herum geführt werden.

Das Rotorelement 4, das Rundmesser 10 sowie die weiteren Komponenten des Schneidemoduls 1 sind in den nachfolgenden Figuren 3 bis 10 noch detailliert dargestellt und beschrieben. Die Figuren 3 bis 10 zeigen dabei einzelne Teile des Schneidemoduls 1 in verschiedenen Detailansichten und Einzeldarstellungen, wobei wiederum andere Komponenten des Schneidemoduls 1 zur besseren Darstellung ausgeblendet sind.

Zunächst soll allerdings ein beispielhaftes, mit der erfindungsgemäßen Vorrichtung 2 bearbeitbares elektrisches Kabel 3 anhand von Figur 2 beschrieben werden. Das beispielhaft in Figur 2 dargestellte elektrische Kabel 3 weist einen Kabelmantel 12 auf, der alle weiteren Kabelkomponenten 13, 14, 16 einhüllt. Unmittelbar unterhalb des Kabelmantels 12 verläuft ein Kabelschirmgeflecht 13 aus miteinander verflochtenen Einzeldrähten. Unmittelbar unterhalb des Kabelschirmgeflechts 13 verläuft eine Kabelfolie 14, die sich beispielsweise gewickelt durch das Kabel 3 entlang der Kabelmittelachse M_{K} erstreckt. Die Kabelfolie 14 umhüllt zwei Innenleiter 15, die wiederum jeweils in einer Isolation 16 verlaufen. Die Innenleiter 15 können als einzelne Drähte oder aber vorzugsweise als Litze aus mehreren Einzeldrähten ausgebildet sein. Vorzugsweise verlaufen die Innenleiter 15 verdrillt durch das elektrische Kabel 3.

Grundsätzlich eignet sich die Erfindung zur Verwendung mit einem beliebigen Kabel 3. Insbesondere die Kabelbearbeitung durch das Schneidemodul 1 eignet sich allerdings besonders vorteilhaft zur Verwendung mit Kabeln 3 mit einem asymmetrischen Querschnitt, beispielsweise wie dargestellt. Auch die Bearbeitung von Flachbandkabeln kann vorteilhaft möglich sein. Bei der Kabelkomponente 12, 13, 14, 16, in die erfindungsgemäß von dem Rundmesser 10 an der vorgesehenen Schnittposition S_{P} eingeschnitten wird, kann es sich beispielsweise um den Kabelmantel 12 des Kabels 3, die Kabelfolie 14 und/oder ein Dielektrikum, beispielsweise die Isolationen 16, handeln.

Das Schneidemodul 1 kann eine modulinterne Greifereinrichtung 17 aufweisen die eingerichtet ist, um das Kabel 3 während dessen Bearbeitung zu fixieren. Die modulinterne Greifereinrichtung 17 ist in den Figuren 1, 3 und 11 dargestellt. Die modulinterne Greifereinrichtung 17 weist zwei aufeinander zu schwenkbare Klemmbacken 18 auf. Zur Verdeutlichung ist in den Figuren 1 und 3 eine der Klemmbacken 18 in ihrem das Kabel 3 fixierenden Zustand und die zweite Klemmbacke 18 in einem geöffneten Zustand dargestellt. Die modulinterne Greifereinrichtung 17 kann elektrisch, pneumatisch und/oder hydraulisch betreibbar sein. Auch ein manueller Betrieb, also ein manuelles Einspannen des Kabels 3, ist gegebenenfalls möglich.

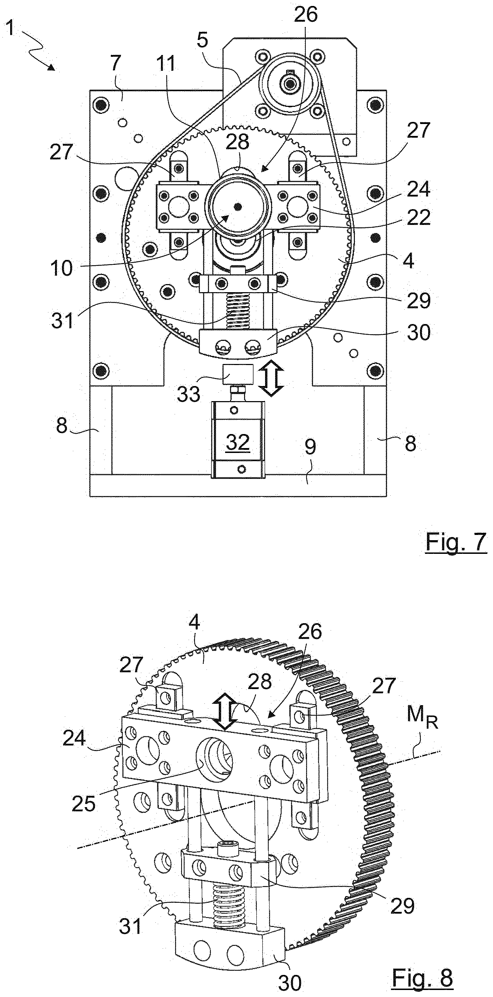

Die modulinterne Greifereinrichtung 17 kann außerdem entlang einer in Richtung der Mittelachse M_{R} (vgl. Figur 8) des Rotorelements 4 verlaufenden Zustellrichtung Z (vgl. Figur 3 oder Figur 11) bewegbar sein, um das Kabel 3 mit seiner Schnittposition S_{P} an die Schneide 11 des Rundmessers 10 axial zuzustellen. Hierzu kann eine Linearführung vorgesehen sein, die beispielsweise einen schienengeführten Schlitten 19 und einen Linearmotor 20 aufweist (vgl. insbesondere Figur 3). Es kann aber alternativ auch vorgesehen sein, dass ein Mitarbeiter der Produktion das Kabel 3 zu dessen Bearbeitung in das Schneidemodul 1 zustellt.

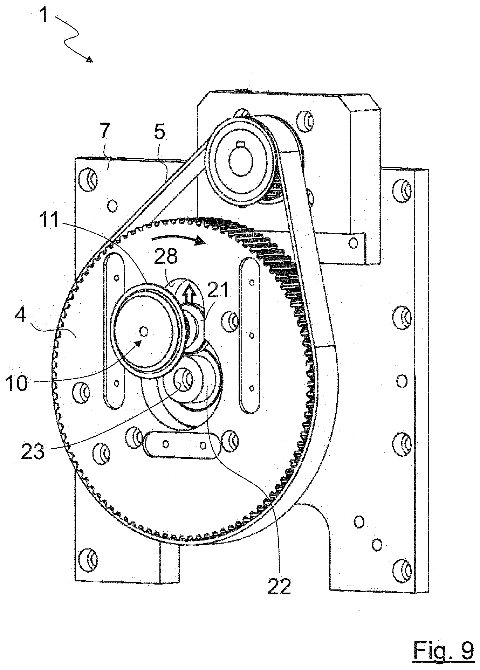

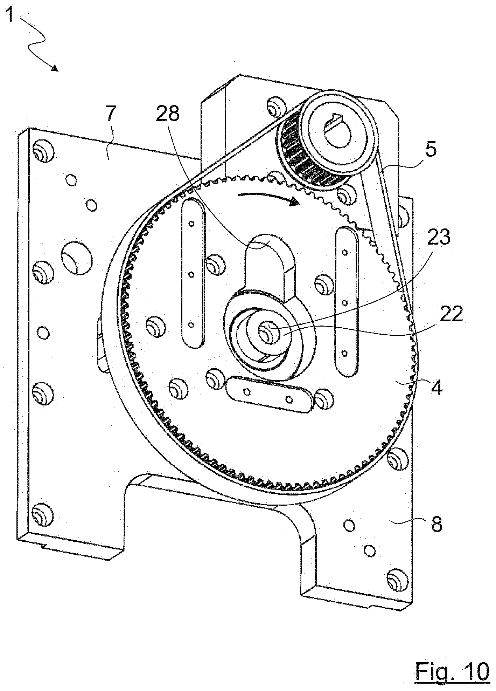

In Figur 4 ist ein beispielhaftes Rundmesser 10 in einer perspektivischen Einzeldarstellung gezeigt. Das Rundmesser 10 weist eine vollständig runde Schneide 11 auf. Ferner weist das Rundmesser 10 eine zentrale Antriebsrolle 21 auf, mit der das Rundmesser 10 in seinem an die Kabelmittelachse M_{K} zugestellten Zustand entlang des Umfangs eines Schablonenelements 22 des Schneidemoduls 1 herum führbar ist, wenn das Rotorelement 4 seine Drehbewegung ausführt. Das relativ zu dem Rotorelement 4 feststehende Schablonenelement 22 ist koaxial in dem Rotorelement 4 angeordnet und besonders gut anhand der Figuren 9 und 10 erkennbar.

Das Schablonenelement 22 bildet den Querschnittsverlauf der Kabelkomponente 12, 13, 14, 16 nach. Auf diese Weise kann das Rundmesser 10 vorteilhaft um das Kabel 3 herum geführt und außerdem in seiner Schnitttiefe begrenzt werden.

Optional weist das Schablonenelement 22 eine zentrale Öffnung 23 zur Aufnahme des freien Endes des Kabels 3 auf.

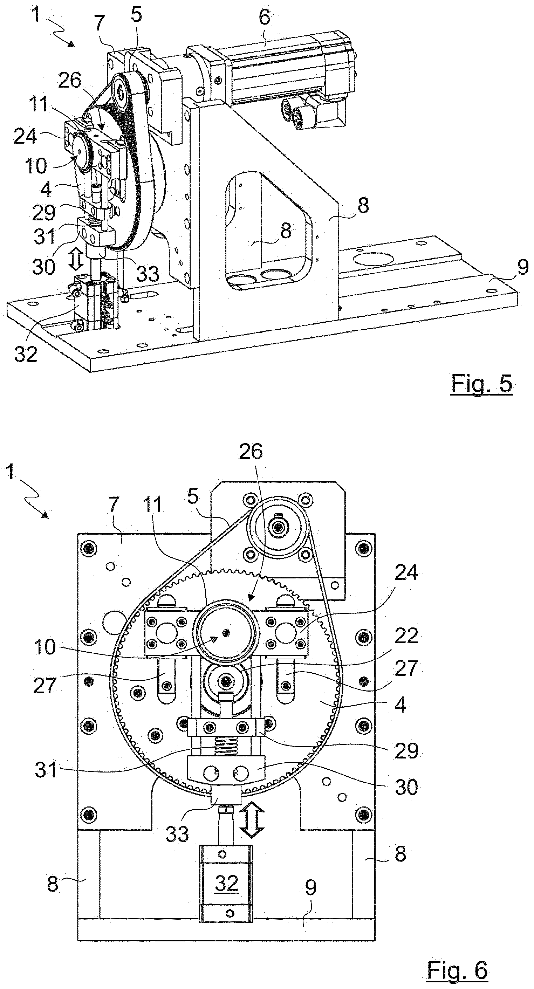

Das Rotorelement 4 weist eine Lagerplatte 24 für das Rundmesser 10 auf (vgl. insbesondere die Figuren 5 bis 8). Das Rundmesser 10 ist durch eine Bohrung 25 (vgl. Figur 8) der Lagerplatte 24 hindurchgeführt und mit einem mittleren Abschnitt formschlüssig, jedoch drehbar in der Lagerplatte 24 aufgenommen. Beispielsweise kann ein Lager des Rundmessers in der Bohrung 25 der Lagerplatte 24 starr bzw. unbeweglich fixiert sein. Im Ausführungsbeispiel ist das Statorelement eines Kugellagers des Rundmessers 10 in der Bohrung 25 der Lagerplatte 24 fixiert. Auf diese Weise kann das Rundmesser 10 an dem Rotorelement 4 drehbar gehalten werden.

Das Rundmesser 10 ist zusammen mit der Lagerplatte 24 in Richtung auf die Mittelachse M_{R} des Rotorelements 4 bzw. in Richtung auf die Kabelmittelachse M_{K} zustellbar. Eine beispielhafte Möglichkeit der Zustellung ist in den Figuren 5 bis 8 dargestellt.

Für die Zustellung weist die Lagerplatte 24 eine Führungseinrichtung 26 auf. Die Führungseinrichtung 26 umfasst zwei auf dem Rotorelement 4 befestigte Führungsschienen 27 (vgl. insbesondere die Figuren 6 bis 8) zur Führung der Lagerplatte 24. Durch das Rotorelement 4 erstreckt sich außerdem der in den Figuren 9 und 10 gut erkennbare Führungskanal 28 zur Führung des Rundmessers 10 bzw. dessen Antriebsrolle 21.

Auf dem Rotorelement 4 ist ein Stützkörper 29 unbeweglich befestigt. Zwischen dem Stützkörper 29 und einem mit der Lagerplatte 24 starr gekoppelten Betätigungsglied 30 ist ein Federelement 31 vorgesehen, das derart angeordnet ist, dass die Federkraft des Federelements 31 die Lagerplatte 24 in Richtung auf die Mittelachse M_{R} des Rotorelements 4 drückt. Der Zusammenhang ist besonders gut durch einen Vergleich der Figuren 6 und 7 und im Hinblick auf Figur 8 erkennbar. In Figur 7 ist das Schneidemodul 1 in einem Zustand dargestellt, in dem das Rundmesser 10 an die Kabelmittelachse M_{K} zum Einschneiden in die Kabelkomponente 12, 13, 14, 16 zugestellt ist. Hingegen ist in Figur 6 ein Zustand des Schneidemoduls 1 dargestellt, in dem das Rundmesser 10 von der Kabelmittelachse M_{K} entfernt ist, beispielsweise um das Kabel 3 zuzustellen oder aus dem Schneidemodul 1 herauszubewegen. Hierzu ist es allerdings erforderlich, entgegen der Federkraft auf das Betätigungsglied 30 einzuwirken. Hierfür umfasst das Schneidemodul 1 einen Aktuator 32, im Ausführungsbeispiel ein Linearaktuator, der einen linear beweglichen Stempel 33 zur Kraftübertragung auf das Betätigungsglied 30 aufweist.

In Figur 11 ist beispielhaft eine erfindungsgemäße Vorrichtung 2 zusammen mit einem nur schematisch dargestellten Schneidemodul 1 und weiteren Modulen 36, 39, 43 zur Konfektionierung des elektrischen Kabels 3 angedeutet. Das Schneidemodul 1 und die weiteren Module 36, 39, 43 sind lediglich schematisch als Blackbox angedeutet.

Die Vorrichtung 2 weist eine Transporteinrichtung 34 auf, um das zu bearbeitende Kabel 3 entlang einer Transportrichtung T an das Schneidemodul 1 bzw. an die Module 36, 39, 43 zuzustellen. Die Transporteinrichtung 34 kann grundsätzlich beliebig ausgebildet sein. Im Ausführungsbeispiel ist beispielhaft ein Schienensystem dargestellt, auf dem mehrere modulexterne Greifereinrichtungen 35 bewegbar sind. Die modulexternen Greifereinrichtungen 35 sind außerdem ausgebildet, um das Kabel 3 jeweils zu fixieren. Beispielsweise können modulexterne Greifereinrichtungen 35 eingesetzt werden, die denselben Aufbau aufweisen wie die bereits vorgestellten modulinterne Greifereinrichtung 17. Hierdurch kann der Aufbau der Vorrichtung 2 insgesamt besonders modular sein.

Die einzelnen Module 36, 39, 43 der Vorrichtung 2 können synchronisiert getaktet sein, um eine möglichst effiziente Fertigungsstraße für die Konfektionierung des Kabels 3 bereitzustellen.

In Figur 11 sind beispielhaft einige der Greifereinrichtungen 17, 35 in ihrem geöffneten und weitere Greifereinrichtungen 17, 35 in ihrem geschlossenen Zustand dargestellt. Beispielsweise kann vorgesehen sein, dass nach dem Transport des Kabels 3 zu einem der Module 36, 39, 43 bzw. zu dem Schneidemodul 1 zunächst die modulinterne Greifereinrichtung 17 geschlossen und anschließend die modulexterne Greifereinrichtung 35 geöffnet wird. Die Fixieraufgabe des Kabels 3 kann somit zwischen der modulexternen Transporteinrichtung 34 und dem jeweiligen Modul 36, 39, 43 bzw. dem Schneidemodul 1 wechseln. Nach der Bearbeitung durch das Modul 36, 39, 43 / Schneidemodul 1 kann schließlich wieder die modulexterne Greifereinrichtung 35 die Aufgabe der Kabelfixierung übernehmen.

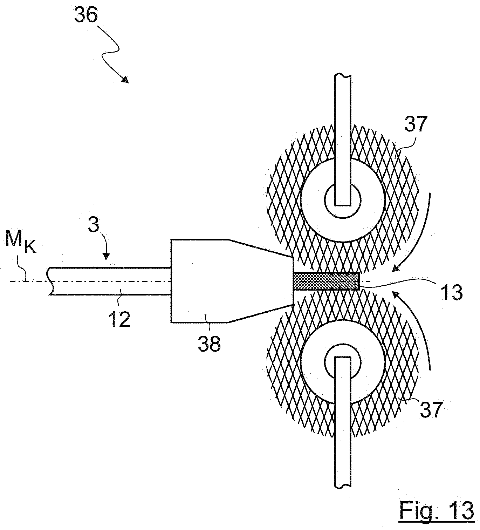

Zur Konfektionierung des elektrischen Kabels 3 kann die Vorrichtung 2 beispielsweise ein Kabelschirmbearbeitungsmodul 36 zum Ablängen und/oder Umlegen des Kabelschirmgeflechts 13 des Kabels 3 aufweisen. Das Kabelschirmbearbeitungsmodul 36 kann beispielsweise wenigstens eine antreibbare Bürste 37 aufweisen, vorzugsweise genau zwei antreibbare Bürsten 37, die eingerichtet sind, um das Kabelschirmgeflecht 13 des Kabels 3 durch Bürsten ausgehend von dem vorderen Kabelende in Richtung auf ein dem vorderen Ende gegenüberliegendes Kabelende umzulegen. Das Prinzip ist beispielhaft in Figur 13 stark vereinfacht angedeutet. Das Kabelschirmgeflecht 13 kann optional über eine Stützhülse des späteren Steckverbinders oder eine Formhülse 38 zur Formung des Kabelschirmgeflechts 13 an der Umlegeposition und/oder zur Festlegung der Umlegeposition umgelegt werden.

Dem Kabelschirmbearbeitungsmodul 36 nachgeordnet kann beispielsweise das bereits beschriebene Schneidemodul 1 vorgesehen sein. Durch das Schneidemodul 1 kann die Kabelkomponente 12, 13, 14, 16 zumindest teilringförmig, vollständig oder abschnittsweise entlang des Umfangs des Kabels 3 an der vorgesehenen Schnittposition S_{P} eingeschnitten werden. Die Kabelkomponente 12, 13, 14, 16 kann vorzugsweise derart eingeschnitten werden, dass sich ein Riss zumindest durch eine Außenschicht der Kabelkomponente 12, 13, 14, 16 ausbildet.

Dem Schneidemodul 1 nachgeordnet kann beispielsweise ein Trennmodul 39 zum Abtrennen eines Endstücks der Kabelkomponente 12, 13, 14, 16 an der Schnittposition S_{P} vorgesehen sein. Ein beispielhaftes Trennmodul 39 ist in vereinfachter Darstellung in Figur 12 gezeigt.

Das Trennmodul 39 kann ein Greifwerkzeug 40 aufweisen das eingerichtet ist, um das abzutrennende Endstück der Kabelkomponente 12, 13, 14, 16 angrenzend an die Schnittposition S_{P} zu ergreifen. Hierfür können Greifbacken 41 vorgesehen sein, die in einer Schwenkbewegung auf die Kabelmittelachse M_{K} zustellbar sind. Das Greifwerkzeug 40 kann grundsätzlich auch ausgebildet sein wie eine der Greifereinrichtungen 17, 35 um die Modularität der Vorrichtung 2 weiter zu verbessern.

Das Trennmodul 39 kann ferner eine Aktuatorbaugruppe 42 aufweisen die ausgebildet ist, um das Greifwerkzeug 40 entlang zumindest eines Rotationsfreiheitsgrads zu bewegen, während das Greifwerkzeug 40 das Kabel 3 fixiert. Besonders bevorzugt ist das Greifwerkzeug 40 entlang zumindest zweier Rotationsfreiheitsgrade bewegbar, wie in Figur 12 dargestellt.

Dem Trennmodul 39 kann optional ein Reinigungsmodul 43 zum Entfernen von an dem Kabel 3 anhaftenden Partikeln, beispielsweise Folienresten, nachgeordnet sein.

Dem Trennmodul 39 kann schließlich auch ein Qualitätsüberwachungsmodul (nicht dargestellt) zur Prüfung der Bearbeitungsqualität des Kabels 3 nachgeordnet sein.

Grundsätzlich kann jedes der Module 36, 39, 43, beispielsweise auch das Schneidemodul 1, die Bearbeitungsqualität und/oder den Bearbeitungszustands des Kabels 3 überprüfen (jeweils vor, während und/oder nach der Bearbeitung des Kabels 3). Beispielhaft sind in Figur 1 zwei optische Sensoren 44 dargestellt, mittels derer ein Bearbeitungszustand des Kabels 3, beispielsweise ein Bestückungszustand des Kabels 3, und gegebenenfalls die Positionierung des Kabels 3 in dem Schneidemodul 1, überwachbar sein können.

## Patentansprüche

1. Vorrichtung (2) zur Konfektionierung eines elektrischen Kabels (3), aufweisend ein Schneidemodul (1) zum Einschneiden in eine Kabelkomponente (12, 13, 14, 16) des Kabels (3) an einer vorgesehenen Schnittposition (S_{P}), wobei das Schneidemodul (1) ein antreibbares Rotorelement (4) aufweist, an dem ein eine runde Schneide (11) aufweisendes Rundmesser (10) mit seiner Drehachse (A_{R}) exzentrisch gehalten wird, um das Rundmesser (10) zum Einschneiden in die Kabelkomponente (12, 13, 14, 16) durch eine Drehbewegung des Rotorelements (4) um den Umfang der Kabelkomponente (12, 13, 14, 16) herum zu führen,
**dadurch gekennzeichnet, dass**
das Rotorelement (4) eine zentrale Ausnehmung aufweist, in der ein relativ zu dem Rotorelement (4) feststehendes Schablonenelement (22) koaxial angeordnet ist, wobei das Schablonenelement (22) den Querschnittsverlauf der Kabelkomponente (12, 13, 14, 16) nachbildet.

2. Vorrichtung (2) nach Anspruch 1,
**dadurch gekennzeichnet, dass**
die Schneide (11) des Rundmessers (10) vollständig rund ist.

3. Vorrichtung (2) nach Anspruch 1 oder 2,
**dadurch gekennzeichnet, dass**
das Rotorelement (4) als Zahnriemenrad ausgebildet ist.

4. Vorrichtung (2) nach einem der Ansprüche 1 bis 3,
**dadurch gekennzeichnet, dass**
das Rundmesser (10) eine zentrale Antriebsrolle (21) aufweist, mit der das Rundmesser (10) entlang des Umfangs des Schablonenelements (22) um das Schablonenelement (22) herum führbar ist, wenn das Rotorelement (4) die Drehbewegung ausführt.

5. Vorrichtung (2) nach einem der Ansprüche 1 bis 4,
**dadurch gekennzeichnet, dass**
das Schablonenelement (22) eine zentrale Öffnung (23) zur Aufnahme eines freien Endes des Kabels (3) aufweist.

6. Vorrichtung (2) nach einem der Ansprüche 1 bis 5,
**dadurch gekennzeichnet, dass**
das Rotorelement (4) eine Lagerplatte (24) für das Rundmesser (10) aufweist, wobei das Rundmesser (10) durch eine Bohrung (25) der Lagerplatte (24) hindurchgeführt und mit einem mittleren Abschnitt formschlüssig, jedoch drehbar in der Lagerplatte (24) aufgenommen ist, um das Rundmesser (10) an dem Rotorelement (4) zu halten, wobei die Lagerplatte (24) mittels einer Führungseinrichtung (26) zusammen mit dem Rundmesser (10) in Richtung auf die Mittelachse (M_{R}) des Rotorelements (4) zustellbar ist, wobei das Schneidemodul (1) vorzugsweise einen Aktuator (32) aufweist, um die Lagerplatte (24) in Richtung auf die Mittelachse (M_{R}) des Rotorelements (4) zuzustellen oder von der Mittelachse (M_{R}) des Rotorelements (4) wegzubewegen.

7. Vorrichtung (2) nach Anspruch 6,
**dadurch gekennzeichnet, dass**
die Führungseinrichtung (26) wenigstens eine auf dem Rotorelement (4) befestigte Führungsschiene (27) zur Führung der Lagerplatte (24) aufweist.

8. Vorrichtung (2) nach Anspruch 6 oder 7,
**dadurch gekennzeichnet, dass**
die Führungseinrichtung (26) wenigstens einen sich durch das Rotorelement (4) erstreckenden Führungskanal (28) zur Führung der Lagerplatte (24) und/oder des Rundmessers (10) aufweist.

9. Vorrichtung (2) nach einem der Ansprüche 6 bis 8,
**dadurch gekennzeichnet, dass**
ein Stützkörper (29) auf dem Rotorelement (4) befestigt ist, wobei ein Federelement (31) vorgesehen und derart zwischen dem Stützkörper (29) und der Lagerplatte (24) oder zwischen dem Stützkörper (29) und einem mit der Lagerplatte (24) starr gekoppelten Betätigungsglied (30) angeordnet ist, dass die Federkraft des Federelements (31) die Lagerplatte (24) in Richtung auf die Mittelachse (M_{R}) des Rotorelements (4) drückt.

10. Vorrichtung (2) nach einem der Ansprüche 1 bis 9,
**dadurch gekennzeichnet, dass**
das Schneidemodul (1) einen mit dem Rotorelement (4) zu dessen Antrieb mechanisch gekoppelten Elektromotor (6) aufweist, vorzugsweise einen Servomotor.

11. Vorrichtung (2) nach einem der Ansprüche 1 bis 10,
**gekennzeichnet durch**
ein dem Schneidemodul (1) nachgeordnetes Trennmodul (39) zum Abtrennen eines Endstücks der Kabelkomponente (12, 13, 14, 16) an der Schnittposition (S_{P}), wobei das Trennmodul (39) vorzugsweise ein Greifwerkzeug (40) aufweist das eingerichtet ist, um das abzutrennende Endstück der Kabelkomponente (12, 13, 14, 16) angrenzend an die Schnittposition (S_{P}) zu ergreifen.

12. Vorrichtung (2) nach einem der Ansprüche 1 bis 11,
**gekennzeichnet durch**
ein dem Schneidemodul (1) vorgeordnetes Kabelschirmbearbeitungsmodul (36) zum Ablängen und/oder Umlegen eines ausgehend von einem vorderen Kabelende bis zu einer Abisolierposition freigelegten Kabelschirmgeflechts (13) des Kabels (3).

13. System umfassend ein Kabel mit Kabelkomponenten und eine Vorrichtung (2) nach einem der Ansprüche 1 bis 12,
**dadurch gekennzeichnet, dass**
die Kabelkomponente eine Kabelfolie (14), ein Kabelmantel (12) und/oder ein Dielektrikum (16) ist.

14. System umfassend ein Kabel mit Kabelkomponenten und eine Vorrichtung (2) nach einem der Ansprüche 1 bis 13,
**dadurch gekennzeichnet, dass**
das Kabel (3) einen asymmetrischen Querschnitt aufweist.

15. Verfahren zur Konfektionierung eines elektrischen Kabels (3), wonach eine Kabelkomponente (12, 13, 14, 16) des Kabels (3) an einer vorgesehenen Schnittposition (S_{P}) eingeschnitten wird, wobei ein eine runde Schneide (11) aufweisendes Rundmesser (10) von einem angetriebenen Rotorelement (4) zum Einschneiden in die Kabelkomponente (12, 13, 14, 16) exzentrisch um den Umfang der Kabelkomponente (12, 13, 14, 16) herum geführt wird,
**dadurch gekennzeichnet, dass**
das Rotorelement (4) eine zentrale Ausnehmung aufweist, in der ein relativ zu dem Rotorelement (4) feststehendes Schablonenelement (22) koaxial angeordnet ist, wobei das Schablonenelement (22) den Querschnittsverlauf der Kabelkomponente (12, 13, 14, 16) nachbildet.

## Claims

1. An apparatus (2) for assembling an electrical cable (3), comprising a cutting module (1) for making an incision into a cable component (12, 13, 14, 16) of the cable (3) at a predetermined cutting position (S_{P}), wherein the cutting module (1) comprises a drivable rotor element (4) on which a circular knife (10) having a circular cutting edge (11) is held eccentrically with its axis of rotation (A_{R}), in order to guide the circular knife (10), by a rotational movement of the rotor element (4), around the circumference of the cable component (12, 13, 14, 16) for cutting into the cable component (12, 13, 14, 16),
**characterized in that**
the rotor element (4) comprises a central recess, in which a template element (22) that is stationary relative to the rotor element (4) is arranged coaxially, wherein the template element (22) replicates the cross-sectional contour of the cable component (12, 13, 14, 16).

2. The apparatus (2) according to claim 1,
**characterized in that**
the cutting edge (11) of the circular knife (10) is completely circular.

3. The apparatus (2) according to claim 1 or 2,
**characterized in that**
the rotor element (4) is designed as a toothed belt pulley.

4. The apparatus (2) according to any one of claims 1 to 3,
**characterized in that**
the circular knife (10) comprises a central drive roller (21), by means of which the circular knife (10) is guidable along the circumference of the template element (22) around the template element (22) when the rotor element (4) performs the rotational movement.

5. The apparatus (2) according to any one of claims 1 to 4,
**characterized in that**
the template element (22) comprises a central opening (23) for receiving a free end of the cable (3).

6. The apparatus (2) according to any one of claims 1 to 5,
**characterized in that**
the rotor element (4) comprises a bearing plate (24) for the circular knife (10),
wherein the circular knife (10) is guided through a bore (25) of the bearing plate (24) and is received in the bearing plate (24) in a form-fitting but rotatable manner with a central portion in order to hold the circular knife (10) on the rotor element (4),
wherein the bearing plate (24), together with the circular knife (10), is adjustable in a direction toward a central axis (M_{R}) of the rotor element (4) by means of a guiding arrangement (26), wherein the cutting module (1) preferably comprises an actuator (32) in order to move the bearing plate (24) toward the central axis (M_{R}) of the rotor element (4) or away from the central axis (M_{R}) of the rotor element (4).

7. The apparatus (2) according to claim 6,
**characterized in that**
the guiding arrangement (26) comprises at least one guide rail (27) fixed on the rotor element (4) for guiding the bearing plate (24).

8. The apparatus (2) according to claim 6 or 7,
**characterized in that**
the guiding arrangement (26) comprises at least one guide channel (28) extending through the rotor element (4) for guiding the bearing plate (24) and/or the circular knife (10).

9. The apparatus (2) according to any one of claims 6 to 8,
**characterized in that**
a support body (29) is fixed on the rotor element (4),
wherein a spring element (31) is provided and arranged between the support body (29) and the bearing plate (24), or between the support body (29) and an actuating member (30) rigidly coupled to the bearing plate (24), such that the spring force of the spring element (31) urges the bearing plate (24) toward the central axis (M_{R}) of the rotor element (4).

10. The apparatus (2) according to any one of claims 1 to 9,
**characterized in that**
the cutting module (1) comprises an electric motor (6) mechanically coupled to the rotor element (4) for driving the rotor element (4), preferably a servo motor.

11. The apparatus (2) according to any one of claims 1 to 10,
**characterized by**
a separation module (39) arranged downstream of the cutting module (1) for separating an end portion of the cable component (12, 13, 14, 16) at the cutting position (S_{P}),
wherein the separation module (39) preferably comprises a gripping tool (40) configured to grip the end portion of the cable component (12, 13, 14, 16) to be separated adjacent to the cutting position (S_{P}).

12. The apparatus (2) according to any one of claims 1 to 11,
**characterized by**
a cable shield processing module (36) arranged upstream of the cutting module (1) for cutting to length and/or folding back a cable shield braid (13) of the cable (3) that is exposed from a front cable end up to a stripping position.

13. A system comprising a cable with cable components and an apparatus (2) according to any one of claims 1 to 12,
**characterized in that**
the cable component is a cable foil (14), a cable jacket (12) and/or a dielectric (16).

14. A system comprising a cable with cable components and an apparatus (2) according to any one of claims 1 to 13,
**characterized in that**
the cable (3) has an asymmetrical cross-section.

15. A method for assembling an electrical cable (3), wherein a cable component (12, 13, 14, 16) of the cable (3) is incised at a predetermined cutting position (S_{P}), wherein a circular knife (10) having a circular cutting edge (11) is guided eccentrically around the circumference of the cable component (12, 13, 14, 16) by a driven rotor element (4) for cutting into the cable component (12, 13, 14, 16), **characterized in that**
the rotor element (4) comprises a central recess, in which a template element (22) that is stationary relative to the rotor element (4) is arranged coaxially, wherein the template element (22) replicates the cross-sectional contour of the cable component (12, 13, 14, 16).

## Revendications

1. Dispositif (2) pour la préparation d'un câble électrique (3), comprenant un module de coupe (1) pour couper dans un composant de câble (12, 13, 14, 16) du câble (3) à une position de coupe prévue (S_{P}), le module de coupe (1) présentant un élément rotor (4) qui peut être entraîné et sur lequel un élément de coupe rond (10) présentant une lame ronde (11) est maintenu de telle sorte que l'axe de rotation (A_{R}) est excentrique afin de guider l'élément de coupe rond (10) autour de la périphérie du composant de câble (12, 13, 14, 16) au moyen d'un mouvement de rotation de l'élément rotor (4) pour couper dans le composant de câble (12, 13, 14, 16), **caractérisé en ce que** l'élément rotor (4) présente un évidement central dans lequel un élément gabarit (22) fixe par rapport à l'élément rotor (4) est disposé de manière coaxiale, l'élément gabarit (22) reproduisant le tracé de la section transversale du composant de câble (12, 13, 14, 16).

2. Dispositif (2) selon la revendication 1, **caractérisé en ce que** la lame (11) de l'élément de coupe rond (10) est entièrement ronde.

3. Dispositif (2) selon la revendication 1 ou 2, **caractérisé en ce que** l'élément rotor (4) est conçu comme une roue à courroie crantée.

4. Dispositif (2) selon l'une des revendications 1 à 3, **caractérisé en ce que** l'élément de coupe rond (10) comporte un rouleau d'entraînement central (21) avec lequel l'élément de coupe rond (10) peut être guidé le long de la périphérie de l'élément gabarit (22) autour de l'élément gabarit (22) lorsque l'élément rotor (4) effectue le mouvement de rotation.

5. Dispositif (2) selon l'une des revendications 1 à 4, **caractérisé en ce que** l'élément gabarit (22) comporte une ouverture centrale (23) destinée à recevoir une extrémité libre du câble (3).

6. Dispositif (2) selon l'une des revendications 1 à 5, **caractérisé en ce que** l'élément rotor (4) comporte une plaque d'appui (24) pour l'élément de coupe rond (10), l'élément de coupe rond (10) étant guidé à travers un alésage (25) de la plaque d'appui (24) et étant monté par complémentarité de forme avec une partie centrale mais de manière rotative dans la plaque d'appui (24) afin de maintenir l'élément de coupe rond (10) sur l'élément rotor (4), la plaque d'appui (24) pouvant être réglée avec l'élément de coupe rond (10) au moyen d'un dispositif de guidage (26) en direction de l'axe central (M_{R}) de l'élément rotor (4), le module de coupe (1) comportant de préférence un actionneur (32) pour déplacer la plaque d'appui (24) vers l'axe central (M_{R}) de l'élément de rotor (4) ou l'éloigner de l'axe central (M_{R}) de l'élément rotor (4).

7. Dispositif (2) selon la revendication 6, **caractérisé en ce que** le dispositif de guidage (26) comporte au moins un rail de guidage (27) fixé sur l'élément de rotor (4) pour guider la plaque d'appui (24).

8. Dispositif (2) selon la revendication 6 ou 7, **caractérisé en ce que** le dispositif de guidage (26) comporte au moins un canal de guidage (28) s'étendant à travers l'élément de rotor (4) pour guider la plaque d'appui (24) et/ou l'élément de coupe rond (10).

9. Dispositif (2) selon l'une des revendications 6 à 8, **caractérisé en ce qu'**un corps d'appui (29) est fixé sur l'élément rotor (4), un élément ressort (31) étant prévu et disposé entre le corps d'appui (29) et la plaque d'appui (24) ou entre le corps d'appui (29) et un élément d'actionnement (30) couplé de manière rigide à la plaque d'appui (24), de telle sorte que la force élastique de l'élément ressort (31) presse la plaque d'appui (24) en direction de l'axe central (M_{R}) de l'élément rotor (4).

10. Dispositif (2) selon l'une des revendications 1 à 9, **caractérisé en ce que** le module de coupe (1) comporte un moteur électrique (6), de préférence un servomoteur, couplé mécaniquement à l'élément rotor (4) pour entraîner ce dernier.

11. Dispositif (2) selon l'une des revendications 1 à 10, **caractérisé par** un module de séparation (39) disposé en aval du module de coupe (1) pour séparer une extrémité du composant de câble (12, 13, 14, 16) au niveau de la position de coupe (S_{P}), le module de séparation (39) comportant de préférence un outil de préhension (40) qui est conçu pour saisir l'extrémité à séparer du composant de câble (12, 13, 14, 16) à proximité de la position de coupe (S_{P}).

12. Dispositif (2) selon l'une des revendications 1 à 11, **caractérisé par** un module de traitement du blindage de câble (36) disposé en amont du module de coupe (1) pour couper à longueur et/ou rabattre un blindage de câble (13) du câble (3) dénudé à partir d'une extrémité avant du câble jusqu'à une position de dénudage.

13. Système comprenant un câble avec des composants de câble et un dispositif selon l'une des revendications 1 à 12, **caractérisé en ce que** le composant de câble est une feuille de câble (14), une gaine de câble (12) et/ou un diélectrique (16).

14. Système comprenant un câble avec des composants de câble et un dispositif (2) selon l'une des revendications 1 à 13, **caractérisé en ce que** le câble (3) présente une section transversale asymétrique.

15. Procédé d'assemblage d'un câble électrique (3), selon lequel un composant de câble (12, 13, 14, 16) du câble (3) est découpé à une position de coupe prévue (SP), un élément de coupe rond (10) présentant une lame ronde (11) étant guidé de manière excentrique autour de la périphérie du composant de câble (12, 13, 14, 16) par un élément rotor entraîné (4) afin de couper dans le composant de câble (12, 13, 14, 16), **caractérisé en ce que** l'élément rotor (4) présente un évidement central dans lequel un élément gabarit (22) fixe par rapport à l'élément rotor (4) est disposé de manière coaxiale, l'élément gabarit (22) reproduisant le tracé de la section transversale du composant de câble (12, 13, 14, 16).
